# EUROPÄISCHE PATENTSCHRIFT

(11) **EP 3 565 775 B1**
(45) Veröffentlichungstag und Bekanntmachung des Hinweises auf die Patenterteilung: **22.12.2021**
(21) Anmeldenummer: 18716091.6
(22) Anmeldetag: 06.01.2018
(51) Int. Cl.: B65G 45/16

(54) **ABSTREIFERSYSTEM FÜR GURTFÖRDERER UND VERFAHREN ZUM REINIGEN VON GURTFÖRDERBÄNDERN**
SCRAPER SYSTEM FOR BELT CONVEYORS AND METHOD FOR CLEANING BELT CONVEYORS
SYSTÈME DE RACLAGE POUR CONVOYEURS À BANDE ET PROCÉDÉ DE NETTOYAGE DE BANDES DE CONVOYEURS À BANDE

(30) Priorität: 09.01.2017 DE 102017000078; 04.07.2017 DE 102017114931
(43) Veröffentlichungstag der Anmeldung: 13.11.2019
(73) Patentinhaber: Kill-Frech, Cornelia, 44652 Herne (DE)
(72) Erfinder: SCHWARZE, Hans-Otto, verstorben (DE)
(74) Vertreter: Kalkoff & Partner Patentanwälte mbB
(86) Internationale Anmeldenummer: PCT/DE2018/100006
(87) Internationale Veröffentlichungsnummer: WO 2018/127260

(56) Entgegenhaltungen:
- EP-A1- 0 396 890
- WO-A1-2017/118452
- CN-Y- 2 461 896

## Beschreibung

Die Erfindung betrifft ein Abstreifersystem für hochbelastete Gurtförderbänder, einen geeigneten Gurtabstreiferblock und geeignete Schwenkvorrichtung mit jeweils Energie-absorbierenden Mitteln sowie eine Kombination von Vor-Abstreifer und Nach-Abstreifer. Als Bezuggeber enthält die Erfindung auch das Gurtförderband und die Abwurftrommel. Die Erfindung eignet sich besonders für schnelllaufende Gurtförderbänder, als schnelllaufend sollen im folgenden alle Gurtförderbänder bezeichnet werden, die mit einer Geschwindigkeit von vier Metern pro Sekunde oder schneller betrieben werden.

Die EP 0 396 890 A1 offenbart ein Abstreifersystem umfassend einen einstellbaren und federnd gelagerten Systemträger quer zur Laufrichtung des Gurtförderbandes, an welchem ein Abstreifblock befestigt ist, wobei der Systemträger über eine Trägerhalterung an beiden Seiten des Gurtförderbandes drehbar um eine Träger-Drehachse aufgehängt ist, wobei der Träger-Drehachse mittels einer Federvorrichtung ein vorgebbares Drehmoment aufgeprägt wird, wobei die Träger-Drehachse eine Drehung des Systemträgers zulässt, dass eine Ausweichbewegung des Systemträgers mitsamt seinem Abstreifblock erfolgen kann, wobei die Federvorrichtung aus einer äußeren Feder und einer inneren Feder, über die eine Vorspannung einstellbar ist, gebildet ist.

Gurtabstreifer werden für die verschiedensten Fördergüter und unter den unterschiedlichsten Förderbedingungen eingesetzt. Sie müssen auch bei sich schnell ändernden Guteigenschaften, etwa im Außenbereich bei einsetzendem Regen und fernab von Werkstätten, etwa bei der Rohstoffgewinnung, stets zuverlässig arbeiten, wobei lange Standzeiten gefordert werden. Ausfallzeiten sollen so kurz wie möglich gehalten werden, da in der Regel hohe Folgekosten aufgrund von Produktionsausfällen entstehen.

Um die Durchsätze von Gurtförderern zu erhöhen, können im Grundsatz entweder die Gurte verbreitert oder schwerer beladen oder es kann die Gurtlaufgeschwindigkeit erhöht werden. Selbstverständlich können auch alle diese Maßnahmen parallel erfolgen. In allen diesen Fällen steigen dadurch die Anforderungen an die Gurtabstreifer, deren Aufgabe es ist, das Untertrum eines umlaufenden Gurtes sauber zu halten, nachdem das zu fördernde Fördergut an der Abwurftrommel des Gurtförderers abgeworfen worden ist.

Einer Verbreiterung des Fördergurtes begegnet man auf Seiten der Gurtabstreifer üblicherweise dadurch, dass die Anzahl der auf einem Systemträger installierten Gurtabstreifermodule, die auch als Blöcke oder Abstreiffinger oder Kratzer bezeichnet werden, erhöht wird. Hierdurch lässt sich die durch die Verbreiterung entstehende Welligkeit des Gurtbandes gut ausgleichen. Eine Höherbeladung des Gurtes ist nur möglich, wenn das Fördergut während der Förderung und des dabei auftretenden systemimmanenten Ruckelns nicht seitlich herunterrutschen kann.

Je loser das Fördergut dabei ist, desto weniger kann die Beladung gesteigert werden, klebriges, zum Verhaken neigendes Fördergut ist hier besser geeignet. Entsprechend größere Probleme bereiten dann aber die hierfür zu verwendenden Gurtabstreifersysteme. Es hat sich gezeigt, dass jedes der bekannten und bei mit normaler Geschwindigkeit laufenden Systeme Schwächen bei deutlicher Erhöhung der Gurtlaufgeschwindigkeit und der Gurtbeladung zeigt.

Hierbei steigt der Impuls, der auf die Gurtabstreifermodule übertragen wird, linear, und die Stoßenergie quadratisch mit der Gurtlaufgeschwindigkeit an. Gurtabstreifermodule, die im Bereich der Abwurftrommel angeordnet sind, wirken üblicherweise schiebend und schneidend bzw. schälend. Das am Gurt noch anhaftende Fördergut trifft auf eine Schneide und wird "über Kopf" geschoben. Hierbei wirkt der übertragene Impuls als zusätzliche Andrückkraft. Im Falle von Gurtfehlern oder sehr starken Anbackungen weicht der Gurtabstreifer aufgrund des Impulses üblicherweise radial nach außen aus und federt nach einer gewissen Zeit sanft zurück, damit kein Hack-Effekt seiner meistens scharfen Schneide auf den Gurt einwirkt. Mit zunehmenden Gurtlaufgeschwindigkeiten bewirkt dieser Impuls aber ein entsprechend weites Ausweichen und es dauert somit relativ lange, bis dieser Gurtabstreifer wieder in seiner Ausgangslage ist und weiter seine Abstreifarbeit verrichtet. Seine Spur auf dem Gurt bleibt in dieser Zeit ungereinigt. Sie kann viele Meter lang werden, was inakzeptabel ist.

Wie weit das einzelne Gurtabstreifermodul ausweichen kann, hängt auch davon ab, ob es starr auf dem Systemträger montiert ist und somit, ob das Ausweichen eines einzelnen Moduls gleichzeitig auch zu einer Ausweichbewegung der unbeteiligten Module der übrigen Spuren führt.

Die meisten weiteren Gurtabstreifersysteme setzen am Untertrum kurz hinter der Abwurftrommel an und wirken im Gegensatz zu den schiebenden Gurtabstreifern ziehend. Würde man die Gurtabstreifer fester andrücken, könnte das Gurtband nachgeben und Wellen bilden, was unerwünscht ist. Das Fördergut, das vom Untertrum des Fördergurts abgestreift wird, muss seine Richtung hierbei ändern und fließt nach unten durch die Zwischenräume der Abstreifermodule ab. Hierbei wird der Abstreifer von einer Feder gegen den Gurt gedrückt. Mit zunehmender Geschwindigkeit und steigender Abstreifleistung neigt die Konstruktion zur Verstopfung, da die Zwischenräume dem größeren Volumenstrom nicht mehr gewachsen sind.

In allen diesen Fällen wirken beim Auftreffen von Gurtfehlern oder stark anhaftendem Fördergut auf die Gurtabstreifer erhebliche Kräfte durch Stöße, deren kinetische Energie aufgefangen und abgeleitet werden muss. Diese Stöße wirken auch auf den Systemträger und die Aufhängungen. Sie wirken aber auch direkt auf die Schneiden an der Linie, an der die Schneidkanten an dem Gurt anliegen. Diese Schneidkanten sind aufgrund von Abrieb einer starken Abrasion und somit dem Angriff von Verschleiß ausgesetzt.

Dem begegnet man üblicherweise durch Einsatz besonders harter, abriebfester Materialien, wie Hartmetall oder Keramik, damit möglichst lange Standzeiten erreicht werden. Leider verringert deren Härte aber gleichzeitig deren Zähigkeit und damit die Bruchfestigkeit, so dass sich bei höheren Geschwindigkeiten im Schneidenbereich ein Zielkonflikt ergibt: Man benötigt einerseits harte und spröde Materialien wegen des höheren Verschleißwiderstandes, aber man braucht auch zähere Materialien für die größere Bruchfestigkeit und wegen der erforderlichen erhöhten Aufnahmefähigkeit und der Weiterleitung der höheren kinetischen Energien.

Ein weiterer Zielkonflikt ergibt sich aus der Notwendigkeit, die kinetische Energie durch die Stöße aufzufangen. Üblicherweise wird eine solche Energie in Dämpfungselementen in Verformungsenergie umgewandelt. Problematisch ist dabei die Trägheit solcher Dämpfungen, die umso mehr ansteigt, je mehr Energie abgebaut werden muss. Dieser Trägheitsanstieg ist aber unerwünscht, da mit zunehmender Gurtlaufgeschwindigkeit auch die Reaktionsgeschwindigkeit der Gurtabstreifer auf Stöße im selben Maß steigen und nicht sinken soll.

Ein weiterer Zielkonflikt ergibt sich daraus, dass die höhere Stoßenergie im Falle von Gurtfehlern nicht zur Beschädigung des Gurtes führen darf. Würde man also höhere Federkräfte auf die Gurtabstreifer zum Andrücken sowie massivere Schneiden verwenden, um die höheren Stoßkräfte aufzufangen, wären die auftretenden Reaktionskräfte auf den Gurt ebenfalls erhöht und man liefe Gefahr, den Gurt ernsthaft zu beschädigen. Höhere Andrückkräfte der Gurtabstreifer auf den Gurt würden außerdem die Gurtreibung erhöhen, was höheren Antriebsaufwand und schnelleren Gurtverschleiß zu Folge hätte.

Die Aufgabe der Erfindung ist daher, eine Vorrichtung zu schaffen, die eine Erhöhung der Gurtlaufgeschwindigkeit wie auch der Gurtbeladung ermöglicht und die oben beschriebenen Zielkonflikte löst.

Die Erfindung löst die Aufgabe gemäß dem unabhängigen Anspruch 1 mittels eines Abstreifersystems für den von einer Abwurftrommel gebildeten Umlenkbereich von Gurtförderbändern mit einer Abwurftrommel und einem Gurtförderband, umfassend
- mindestens einen einstellbaren und federnd gelagerten Systemträger quer zur Laufrichtung des Gurtförderbandes,
- an welchem einer oder mehrere Abstreifblöcke aus Elastomer nebeneinander in austauschbarer Weise befestigt sind, wobei
- der Systemträger über eine Trägerhalterung an beiden Seiten der Abwurftrommel drehbar um eine Träger-Drehachse aufgehängt ist, wobei
- der Träger-Drehachse mittels einer Federvorrichtung ein vorgebbares Drehmoment aufgeprägt wird, welches entgegen der Drehrichtung der Abwurftrommel gerichtet ist, und
- die Träger-Drehachse eine Drehung des Systemträgers um einen solchen Drehwinkel zulässt, dass eine Ausweichbewegung des Systemträgers mitsamt seiner Abstreifblöcke erfolgen kann,
- die Federvorrichtung aus einer Einstellfeder, einer mit ihr gekoppelten Dämpfungsfeder, und einem als Zugstange ausgebildeten Federbolzen, der beide Federn mit der Trägerhalterung verbindet, gebildet ist,
- und der Federbolzen einen Absatz aufweist, der die Dämpfungsfeder erst betätigt, wenn die Einstellfeder einen vorgebbaren Federweg zurückgelegt hat.

Zwei äquivalente Ausgestaltungen der Erfindung betreffen die Federvorrichtung. In einer ersten Ausgestaltung wird vorgesehen, dass die Federvorrichtung aufweist
- eine Spiralfeder, die als Einstellfeder wirkt
- eine Elastomerfeder, die als Dämpfungsfeder wirkt
- der Federbolzen an seinem ersten Ende mit der Trägerhalterung verbunden ist und an seinem zweiten Ende eine Einstellmöglichkeit für einen Anschlag aufweist,
- wobei der Anschlag geeignet ist, das eine Ende der Einstellfeder aufzunehmen
- am anderen Ende der Einstellfeder ein weiterer Absatz angebracht ist, der die Einstellfeder mit der Dämpfungsfeder verbindet,
- am Federbolzen ein Anschlag zwischen Einstellfeder und Dämpfungsfeder angebracht ist, der den Federweg der Einstellfeder begrenzt und bei Erreichen dieser Begrenzung an den Absatz schlägt, der gegen die eine Seite der Dämpfungsfeder drückt,
- die Dämpfungsfeder am anderen Ende eine Aufnahme zur Fixierung an der Konsole aufweist.
- auf der anderen Seite der Fixierung an der Trägerhalterung ein Begrenzungsabsatz am Federbolzen angebracht ist, der die Bewegung des Federbolzens in Richtung der Federn begrenzt.

In einer zweiten Ausgestaltung wird vorgesehen, dass die Federvorrichtung aufweist
- eine Spiralfeder, die als Einstellfeder wirkt
- eine Elastomerfeder, die als Dämpfungsfeder wirkt
- der Federbolzen an seinem ersten Ende mit der Trägerhalterung verbunden ist und an seinem zweiten Ende eine Einstellmöglichkeit für einen Anschlag aufweist,
- wobei der Anschlag geeignet ist, das eine Ende der Dämpfungsfeder aufzunehmen
- am anderen Ende der Dämpfungsfeder ein weiterer Absatz angebracht ist, der die Einstellfeder mit der Dämpfungsfeder verbindet,
- am Federbolzen ein Anschlag zwischen Einstellfeder und Dämpfungsfeder angebracht ist, der den Federweg der Einstellfeder begrenzt und bei Erreichen dieser Begrenzung an den Absatz schlägt, der gegen die eine Seite der Dämpfungsfeder drückt,
- die Einstellfeder am anderen Ende eine Aufnahme zur Fixierung an der Konsole aufweist.
- auf der anderen Seite der Fixierung an der Trägerhalterung ein Begrenzungsabsatz am Federbolzen angebracht ist, der eine Bewegung des Federbolzens in Richtung der Federn begrenzt.

Die beiden Ausgestaltungen unterscheiden sich nur in der Reihenfolge der beiden Federn, die beide in Serie geschaltet sind, weshalb die beiden Ausführungsformen die gleiche Wirkung haben. Darüber hinaus ist es möglich, andere übliche Materialien zu verwenden oder weitere Dämpfungselemente wie hydraulische oder pneumatische Dämpfer alternativ oder zusätzlich zu verwenden.

Weitere Ausgestaltungen der Erfindung betreffen das Material der Abstreiferblöcke und der Dämpfungsfeder. Diese sollen bei Beanspruchung möglichst viel Schockenergie absorbieren. Sie sind deshalb aus Elastomer gebildet, vorzugsweise als Elastomer Gummi oder ein Polyurethan, vorzugsweise der Shorehärte 90 bis 95 verwendet, auch Kombinationen sind möglich.

Eine weitere Ausgestaltung betrifft die Montage. Hierbei wird vorgesehen, dass bei der Aufnahme zur Fixierung eine wegschwenkbare Vorspannsicherung zwischen Fixierung und Absatz angebracht ist. Bei der Montage kann die Federvorrichtung mitsamt der Trägerhalterung und des Systemträgers mit den Gurtabstreiferblöcken vorgespannt werden, indem man die Einstellmöglichkeit, die beispielsweise als Gewinde mit Muttern ausgeführt werden kann, etwas vorspannt, den Systemträger mit der Trägerhalterung so montiert, dass die Gurtabstreifer lose am Gurtförderband anliegen und dann das wegschwenkbare Distanzelement löst und wegschwenkt. Die Einstellfeder drückt dann den Abstreifer an das Gurtförderband.

Es hat sich als vorteilhaft erwiesen, die Andruckkraft hierbei möglichst niedrig zu wählen, um den Verschleiß möglichst gering zuhalten. Während des Verschleißes zieht die Feder die Gurtabstreiferblöcke nach, bis der Begrenzungsabsatz ein weiteres Nachziehen verhindert. Die Distanz zwischen Begrenzungsabsatz und Fixierung wirkt dabei als Verschleißreserve.

Eine weitere Ausgestaltung betrifft die Lage der Träger-Drehachse, an der die Abstreifblöcke befestigt sind. Hierbei wird vorgesehen, dass die Träger-Drehachse in der Tangente der Abstreiflinie der Abwurftrommel angeordnet ist. Hierbei wird vereinfachend angenommen, dass die Abstreiflinie über die Länge der Abstreifblöcke eine parallele Gerade zur Träger-Drehachse bildet. Im praktischen Einsatz kann diese Abstreiflinie aufgrund ungleichförmiger Abnutzung der einzelnen Abstreifblöcke auch zu einer wellenförmigen Kurvenlinie werden. Sie entspricht auch der Andrücklinie, soweit die Abstreifblöcke unmittelbar an der Abstreiflinie anliegen.

Bezüglich der Anordnung an der Abwurftrommel wird die Andrücklinie typischerweise in Vier-Uhr-Position angeordnet, wenn man davon ausgeht, dass die Abwurftrommel im Urzeigersinn dreht. Bei hohen Gurtlaufgeschwindigkeiten wird der größte Teil des abgeworfenen Fördergutes bereits in Ein- oder Zwei-Uhr-Position abgeworfen und es ist zweckmäßig, wenn dieser Strom des abgeworfenen Fördergutes nicht auf ausweichende Gurtabstreiferblöcke bzw. den Systemträger auftrifft.

Für die Anordnung der Schwenkvorrichtung ist es erforderlich, dass die Lager an beiden Seiten der Träger-Drehachse fluchten und dass die Hebel und Federvorrichtungen auf beiden Seiten der Abwurftrommel gleich sind, wobei es aber in vielen Fällen ausreicht, wenn die Hebel- und Federvorrichtung nur auf einer Seite vorhanden ist. Es ist jedoch nicht erforderlich, dass die Aufhängungen sowie die Befestigung der Konsolen symmetrisch sind. Je nach den örtlichen Gegebenheiten können Feder und Trägerhalterung auch beliebig um die Träger-Drehachse verdreht montiert werden, und zwar an beiden Seiten verschieden, was vor allem bei Nachrüstungen von zuvor langsam laufenden Gurtförderern im Rahmen einer Durchsatzertüchtigung bei beengten Verhältnissen für die Montage vorteilhaft ist.

Weitere Ausgestaltungen betreffen die Abstreifblöcke. Hierbei wird vorgesehen, dass jeder Abstreifblock eine Oberseite mit einer Schutzkappe aus Metall aufweist, die geeignet ist, auf dem Gurtförderband anzuliegen und federnd an das Gurtförderband gedrückt zu werden. Die Form der Oberseite hängt dabei vom Einsatzzweck ab. Sofern auch bei hohen Gurtgeschwindigkeiten vorwiegend pastöse Verschmutzungen abzustreifen sind, können schälend wirkende Gurtabstreiferblöcke, wie sie im Stand der Technik bekannt sind, zum Einsatz kommen.

Im Stand der Technik sind eine Vielzahl von Kopfteilen solcher Abstreifblöcke beschrieben, wobei beispielhaft auf die DE 602 25 704 T2, welche ein Abstreifersystem nach dem Oberbegriff des Anspruchs 1 offenbart, verwiesen wird. Bei jener Schrift reicht das Kopfteil bis zur Andrücklinie auf dem Gurt und wirkt schälend, gegenüber der Tangente an der Andrücklinie weist jenes Kopfteil einen spitzen Winkel auf. Legt man auf die Oberseite der Andrücklinie eine Ebene an, die durch die Andrücklinie verläuft, liegt diese Ebene dabei oberhalb und nicht unterhalb der Mittelachse der Abwurftrommel.

Ist jedoch stückiges und am Gurt anhaftendes Fördergut abzustreifen, müssen teilweise sehr große kinetische Energien beim Auftreffen auf die Gurtabstreiferblöcke aufgefangen und abgebaut werden. Dies ist mit herkömmlicher Abstreifer-Bauweise nicht mit der Forderung nach hohen Standzeiten vereinbar.

In weiteren Ausgestaltungen ist daher vorgesehen, dass jeder Abstreiferblock aus den vier Teilabschnitten:
- Befestigung am Systemträger,
- darüber anschließenden Quader-förmigen Dämpfungsabschnitt,
- darüber einem sich verjüngenden, trapezförmigen Biegeabschnitt,
- und darüber einer Schutzkappe.
aufgebaut ist.

Diese vier Teilabschnitte können entweder ineinander übergehen oder aus einzelnen Teilen bestehen, die mit form- und kraftschlüssigen Methoden zusammengefügt sind. Typische Abmessungen sind eine Breite von 10 bis 20 cm, eine Tiefe des Dämpfungsteils von 8 bis 10 cm, eine Tiefe der oberen Fläche des Biegeteils von 4 bis 5 cm und eine Gesamthöhe von 25 bis 35 cm, vom Systemträger aus gemessen.

Die Abstreifblöcke sind aus elastischem Material geformt. Wichtig ist, dass es sich hierbei nicht um schlanke Abstreiffinger handelt, wie sie beispielsweise in der DE 198 59 263 A1 beschrieben werden, sondern um massive und tiefe Blöcke aus elastischem Material. Diese Abstreifblöcke können über ihre Deformation bei energiereichen Stößen bereits einen großen Teil der kinetischen Energie abbauen, ohne dass ein Ausweichen des gesamten Systemträgers erforderlich ist.

Hierbei kann vorgesehen werden, dass die Oberfläche des Abstreifblocks und der Schutzkappe am Abstreifpunkt bzw. an der Abstreiflinie so gestaltet ist, dass die Abstreifwirkung nicht-schälend ist. Dies wird vorzugsweise dadurch bewirkt, dass die Oberfläche des Abstreifblocks und der Schutzkappe am Abstreifpunkt so gestaltet ist, dass die eine Ebene, die von der Mittelachse der Abwurftrommel und der Andrücklinie aufgespannt wird, die andere Ebene, die an der Andrücklinie auf die Oberseite der Abstreifblöcke angelegt wird, in einem spitzen Winkel schneidet, und die andere Ebene dabei unterhalb der Mittelachse der Abwurftrommel verläuft.

Unter Andrücklinie wird dabei der Ort verstanden, an dem jeder Abstreifblock das Gurtförderband berührt. Während des Betriebs und mit zunehmendem Verschleiß, der für jeden der einzelnen Abstreifblöcke auch unterschiedlich sein kann, ist diese Andrücklinie nicht notwendigerweise eine Gerade und die aufgespannte Ebene ist in praktischen Fällen meist ein Ebenenbündel, wobei der oben beschriebene Zusammenhang aber für alle diese Ebenen, sofern sie nicht zusammenfallen, auch einzeln gilt.

Der Unterschied zwischen der schälenden und der nicht-schälenden Art des Abstreifens entspricht der bei der spanabhebenden Formgebung. Bei der schälenden Art greift die Abstreifkante schneidend unter den Verschmutzungsfilm, der auf diese Weise schneidend nach Art einer Fräse abgehoben wird. Bei der nicht-schälenden Art drückt die Abstreifkante wie eine Feile mit negativem Schnittwinkel auf den Verschmutzungsfilm und schabt ihn reibend weg.

Auf diese Weise kann der Abstreifer grobe Verschmutzungen sowie auch große Mengen an Verschmutzungen sicher vom Gurtband abstreifen.

Weitere Ausgestaltungen betreffen die Schutzkappe und ihre Befestigung. Der Biegeabschnitt läuft nur bei schälenden Gurtabstreiferblöcken spitz zu, bei nicht-schälenden Gurtabstreiferblöcken ist auf der Oberseite eine Fläche, die nach innen hin, zum Mittelpunkt der Umlauftrommel gesehen, leicht abschüssig geneigt ist. Die Schutzkappe deckt diese obere Fläche wenigstens zum Teil ab und erstreckt sich über einen Teil der äußeren Seite des Biegeabschnittes. An dieser äußeren Seite des Biegeabschnittes ist sie typischerweise mit Schraubverbindungen an ihr befestigt.

Die form- und kraftschlüssige Verbindung der Dämpfungsmaterialien und der Schutzkappe ist grundsätzlich problematisch. Die Verformungen der Dämpfungsmaterialien können mehrere Zentimeter betragen, während sich eine Schutzkappe aus Hartmetall oder Edelstahl praktisch nicht verformt. Bei normalen Schraubverbindungen ergeben sich aufgrund der Querkontraktion bei der Dehnung und Stauchung der elastischen Dämpfungsmaterialien Spalten, in die Abstreifgut hineingelangen könnte, was zu erheblichen lokalen Spannungen mit nachfolgender Rissbildung führen kann. Außerdem bewegen sich die Abstreiferblöcke ständig aufgrund der Reibungsanregung durch den Gurt, was auf die nicht-schälende Anordnung zurückzuführen ist, und was zur Lockerung üblicher Schraubverbindungen führt. Der Verbindung zwischen der Schutzkappe und den Dämpfungsmaterialien ist daher besondere Aufmerksamkeit zu schenken.

In einer bevorzugten Ausführungsform ist daher vorgesehen, dass die Schutzkappe winklig ausgeführt wird, wobei die Oberseite auch mehrteilig sein kann, etwa aus Edelstahl gefertigt ist und eine Aufnahme für eine Hartmetallkante aufweist. Während der obere Bereich nach außen leicht ansteigt oder abschnittsweise rund ausgeführt ist, schützt eine abgewinkelte Rückseite die Dämpfungsmaterialien vor auftreffendem Fördergut. An der Innenseite dieser Schutzkappe sind Hülsen eingeschweißt, typischerweise zwei oder drei pro Abstreiferblock, je nach Größe und Breite des Blocks. Die Hülsen weisen in ihrem Inneren teilweise ein Innengewinde auf. Die Dämpfungsmaterialien der Abstreifblöcke weisen entsprechende Bohrungen auf, in die die Hülsen formschlüssig hineingesteckt werden können. Diese Bohrung weisen an der Innenseite einen Absatz auf, auf den ein Sicherungsring gelegt werden kann. Von innen werden die Hülsen dann festgeschraubt, wobei als Schrauben bevorzugt Dehnschrauben und als Sicherungsringe bevorzugt Nordlock-Ringe zum Einsatz kommen. Beim Festschrauben mit definierten Kräften kann das Dämpfungsmaterial dabei so unter Vorspannung gesetzt werden, dass ein Abheben der Schutzkappe unter Durchbiegung sicher unterbunden wird.

Die Funktion des einzelnen Abstreifblockes ist dabei folgende: Im nicht-schälenden Normalbetrieb liegt das obere Ende des Biegeabschnittes am Gurt an. Beim Auftreffen einer Anbackung auf dem Gurt auf das obere Ende bewirkt die Schutzkappe, dass die Relativbewegung zu einem kraftvollen Stoß auf die Anbackung führt. Da die kinetische Energie mit dem Quadrat der Gurtlaufgeschwindigkeit anwächst, wird durch diesen Stoß bei hohen Gurtlaufgeschwindigkeiten eine erhebliche Verformungsenergie in die Anbackung übertragen, was in der Regel ausreicht, um die Adhäsionskräfte an den Gurt zu überwinden. Durch den übertragenen Impuls und die hohen Fliehkräfte werden diese abgetrennten Anbackungen nach oben-außen abgesprengt, quasi weggeboxt. Die Schutzkappe hat dabei die Funktion, dass der Biegeabschnitt gegen spitzes Abstreifgut geschützt wird und dass die kinetische Stoßenergie auf die gesamte Breite des Abstreiferblocks verteilt wird. Außerdem hält ihre träge Masse im Normalfall die Auslenkungen des Gurtabstreiferblocks klein.

Die Reaktionskraft des stumpfen Stoßes beim Aufprall des Abstreifgutes drückt den Biegeabschnitt dabei zunächst zusammen und gleichzeitig leicht aufgrund des Impulses gegen den Gurt, was den Andruck leicht erhöht und zu einer Biegung des Biegeabschnitts führt, dessen Krümmung der Krümmung der Abwurftrommel gleichgerichtet ist. Die vom Abstreifblock aufgenommene Energie aufgrund der der Reaktionskräfte wird dann in sehr kurzer Zeit, im praktischen Fall handelt es sich dabei um einzelne Millisekunden, durch die elastische Verformung von Biegeabschnitt und Dämpfungsabschnitt abgebaut. Während der Verformung verbleibt das obere Ende des Biegeabschnitts am Gurt und es entstehen keine ungereinigten Abschnitte.

Da im oberen Ende des Biegeabschnitts aber absichtlich keine schälende Wirkung erzeugt wird, stellt sich auf der Reinseite des Abstreifblockes meist ein verbleibender feiner Film auf dem Fördergurt ein, der bei Bedarf vom Nachabstreifer vollständig entfernt wird. Eine Wirkung des sich einstellenden Films ist, dass die Oberkante des Abstreifblocks keine scharfe Kante ausbilden kann, sondern dass sich im laufenden Betrieb durch Abrasion eine leicht gerundete Kante einstellt, die die Gurtoberfläche beim schnellen Zurückfedern nicht beschädigen kann. Im Gegensatz zu herkömmlichen Gurtabstreifern ist diese abstumpfende Wirkung also nicht unerwünscht. Im Gegensatz zum schälenden Gurtabstreiferblock ist der nicht-schälende Gurtabstreiferblock nicht selbstschärfend.

Beim Auftreffen von Gurtfehlern, also solchen Stellen, die nicht abgesprengt oder zerstört werden können und sollen, ändert sich die Funktion des Abstreifblocks. Sobald ein Hindernis die Oberseite des Biegeabschnitts passiert, wird der gesamte Abstreifblock zusammen mit dem Systemträger und allen anderen auf dem Systemträger montierten Abstreifblöcken nach außenunten verlagert. Der Biegeabschnitt verbiegt sich dabei stark in die andere Richtung, im Vergleich zur Biegerichtung bei abstoßbaren Anbackungen, wobei die sich ergebende Krümmung entgegen der Gurtkrümmung umkehren kann, und seine Bogenspannung wird als Drehmoment bis zur Aufhängung am Systemträger übertragen. Die Aufhängung am Systemträger ist aus diesem Grund so gestaltet, dass ein Drehmoment auf den Systemträger übertragen werden kann.

Das übertragene Drehmoment führt zu einer entsprechenden Drehung des Systemträgers um eine Drehachse. Die Feder ist dabei, wie bereits oben beschrieben, mindestens zweistufig ausgeführt. In einer ersten Stufe wird die Andruckkraft eingestellt, über die der Systemträger die Abstreifblöcke gegen den Gurt drückt. Sobald im Falle eines Gurtfehlers ein Ausweichen des Systemträgers durch einen der Abstreifblöcke erzwungen wird, bewirkt der Federweg eine dem Federweg entsprechende Auslenkung des Systemträgers. Der Anschlag, der die Einstellfeder begrenzt, ist dabei so platziert und dimensioniert, dass er die maximal mögliche Öffnungsweite der Gurtabstreiferblöcke definiert. Dadurch wird gewährleistet, dass die größtmöglichen Gurtfehler noch sicher passieren können, andererseits die Gurtabstreifer aber nicht so weit ausgelenkt werden, dass zwischen Beginn der Auslenkung und dem Wiederanlegen an den Gurt eine zu große ungereinigte Fläche des Gurts entsteht. Der Ausschwenkvorgang einschließlich des Zurückschwenkens dauert dabei üblicherweise zwischen 30 und 40 Millisekunden. Bei einer Gurtlaufgeschwindigkeit zwischen 6 und 8 m/s ergibt sich damit ein ungereinigter Nachlauf von nur 0,18 bis 0,32 Metern.

Die Befestigung am Systemträger erfolgt dabei entsprechend bekannter Technologie. Dabei wird eine Leiste mit Aussparungen am Systemträger angebracht, so dass sich ein Nut-FederSystem mit den Abstreifblöcken ergibt. Mittels eingesteckter Hülsen-Schraubsystemen ist eine Verbindung analog der Verbindung der Schutzkappe vorzunehmen, wobei die Verbindungen gegen Losdrehen aufgrund von Schwingungen entsprechend analog zu sichern ist.

Abmessungen und Materialien müssen auf die hohen Gurtlaufgeschwindigkeiten abgestimmt werden. Einerseits soll der Abstreiferblock bei stumpfen Stößen großen Widerstand leisten und sich möglichst wenig von der Gurtoberfläche lösen. Wenn allerdings echte Hindernisse auftreten, soll der Abstreifblock sofort ausweichen. Diese beiden Forderungen widersprechen sich, um zwar umso mehr, je höher die Gurtlaufgeschwindigkeit ist. Einerseits bedeutet der quadratische Anstieg der kinetischen Energie mit der Gurtlaufgeschwindigkeit, dass dem Impuls- und Energieabbau schon aus Stabilitätsgründen mehr Eigenmasse der Gurtabstreifer entgegengesetzt werden muss, andererseits muss der Gurtabstreiferblock innerhalb einer Millisekunde zwei völlig unterschiedliche Reaktionen ermöglichen und darf daher keine zu große Trägheit entwickeln. Er muss inhärent augenblicklich entscheiden können, ob das Hindernis kraftvoll abgeräumt werden kann oder muss, oder nicht.

Gegenüber dem Stand der Technik soll das Kopfteil jedoch lediglich einen Schutz vor aufprallendem Fördergut sowie für eine bessere Verteilung der Stoßkräfte und der Stoßenergie sorgen und ist daher als eine Art Schutzkappe ausgeprägt. Es ist auch nicht erforderlich, wenn auch nicht schädlich, dass große Andruckkräfte die Gurtabstreiferblöcke gegen den Gurt drücken, es darf sich aber keine scharfe Schneide bilden, die den Gurt beschädigen kann. Während bei niedrigen Gurtgeschwindigkeiten die Schälwirkung des Gurtabstreifers notwendig ist, unterstützt bei hohen Gurtgeschwindigkeiten die Zentrifugalkraft während des Umlenkvorgangs die Schälwirkung so erheblich, dass eine Ablösung der Verunreinigungen aufgrund der Stoßenergie meist allein durch deren Aufprall auf die Schutzkappe erfolgen kann, also durch Abschlagen und Abstreifen. Insofern ist der zugrundeliegende technische Effekt von dem eines schälenden Gurtabstreifers verschieden.

Sofern aber ein Gurtfehler oder eine Unebenheit des Gurtes dazu führt, dass ein Ausweichen erfolgen muss, bewirkt zunächst die Verformung des einzelnen Gurtabstreiferblocks den Abbau der übertragenen Energie, indem sich das Modul als Ganzes stark deformiert. Erst wenn diese Deformationen zu stark werden, weicht der ganze Systemträger aus.

Dieses Ausweichen erfolgt auf eine bestimmte Weise. Es erfolgt als Schwenken um eine Träger-Drehachse, die in einer zweiteiligen Trägerhalterung gelagert ist, wobei an jeder der Seiten der Abwurftrommel je ein Teil der Trägerhalterung positioniert ist. Jedes der beiden Teile der Trägerhalterung weist ein Festlager auf, wobei die beiden Festlager der beiden Teile nicht symmetrisch zueinander an den beiden Seiten der Abwurftrommel liegen müssen. Lediglich die Träger-Drehachse muss fluchten.

Die Funktion im Betrieb ist dabei die folgende: Zunächst wird das Drehmoment aus Reibkräften und Schlagkräften durch den Abstreiferblock auf die Achse des Systemträgers übertragen und von dort auf die Trägerhalterung. Die Federvorrichtung wird durch die Einstellfeder und die Dämpfungsfeder gebildet und fängt das Drehmoment bei einem Schlag schrittweise ab. Hierbei wird zunächst die Einstellfeder betätigt, die den Andruck des Abstreiferblocks an den Gurt bestimmt. Diese Einstellfeder ermöglicht ein besonders schnelles und weites Ausweichen, was aufgrund der hohen Gurtlaufgeschwindigkeit erforderlich ist.

In einem zweiten Schritt wird durch eine Dämpfungsfeder, die typischerweise aus einem Elastomer wie Gummi oder Polyurethan gefertigt ist, eine weitere Federung unter sehr starker Dämpfung ausgeführt, die Ausweichweite wird hierbei stark eingeschränkt. Die Dämpfung des zweiten Schritts hat dabei die Aufgabe, die erhebliche kinetische Energie, die auf den Federmechanismus übertragen wird, möglichst umfassend abzubauen, damit die Belastungen auf die Konsole, an der die Träger-Drehachse und auf die Fixierung der Federvorrichtung einwirken, nicht zu plastischen Verformungen führen.

Beim Zusammendrücken der Einstellfeder im Falle eines Ausweichvorgangs schiebt die der Dämpfungsfeder zugewandte Seite der Einstellfeder den Absatz der Dämpfungsfeder in Richtung der Fixierung. Dieser Absatz der Dämpfungsfeder greift von der Gegenseite aus an die Dämpfungsfeder an und drückt sie gegen die Fixierung zusammen. Die Fixierung verbindet die Feder mit der Konsole. Die Federlänge der Dämpfungsfeder ist vergleichsweise kurz, was das Rückfedern des Ausschwenkvorgangs insgesamt beschleunigt und dazu führt, dass der Abstreiferblock schon nach sehr kurzer Zeit wieder am Gurt anliegt.

Verschiedene Abstreifer mit ähnlichem Aufbauten und Anordnungen wie der Abstreifer aus der vorliegenden Erfindung sind aus dem Stand der Technik bereits bekannt. Beispielsweise offenbart die CN 18 50 359 A einen Abstreifer 1, der auch aus mehreren Blöcken bestehen kann, und der schiebend an die Abwurftrommel 11 des Gurtbandes an den Gurt gedrückt wird, wobei der Abstreifer 1 auf einem Träger 2 befestigt ist, und der Träger 2 an einer Verlagerung befestigt ist, und eine Feder 6 in einem Gehäuse 9 gelagert und durch ein Gewinde 7 sowie eine Verbindungsstange 8 so einstellbar ist, dass der Abstreifer an den Gurt gedrückt wird. Hierbei ist die Feder 6 offenbar im Neuzustand des Abstreifers unter Spannung so eingestellt, dass der Abstreifer 1 an den Gurt gedrückt wird. Während des Verschleißens des Abstreifers zieht die Feder 6 nach unten und sorgt dafür, dass der Abstreifer 1 stets an den Gurt gedrückt wird. Die Verbindung mit dem Gewinde 7 und der Verbindungsstange 8 ermöglicht nur eine minimale Nachführung des Abstreifers 1. Aufgrund der Konstruktion ist es hier nicht vorgesehen und auch nicht möglich, dass der Abstreifer ausschwenkt, um einem Hindernis auf dem Gurt auszuweichen.

Auch die CN 102 826 363 A beschreibt einen Abstreifer, aufweisend einen Abstreifer 9, der auch aus mehreren Blöcken bestehen kann, und der schiebend an die Abwurftrommel 11 des Gurtbandes 12 an den Gurt gedrückt wird, wobei der Abstreifer 9 auf einem Träger 8 befestigt ist, und der Träger 8 an einer Verlagerung 2 befestigt ist, und eine Feder 6 an der Verlagerung derart befestigt ist, dass die Feder 6 den Hebelarm 11 drückt. Da der Hebelarm 11 mit dem Abstreifer 9 auf dem Träger 8 fest verbunden ist, wird der Abstreifer 9 über den verschiebbaren 3 infolge der Hebelwirkung an den Gurt 12 gedrückt. Hier ist die Feder 6 im Neuzustand des Abstreifers auch so eingestellt, dass der Abstreifer 9 an den Gurt drückt. Während des Verschleißens des Abstreifers drückt die Feder 6 nach und sorgt dafür, dass der Abstreifer 9 stets an den Gurt gedrückt wird. Aufgrund der Konstruktion ist es hier auch nicht vorgesehen oder möglich, dass der Abstreifer ausschwenkt, um einem Hindernis auf dem Gurt auszuweichen. Insgesamt scheint der Aufbau des Abstreifers empfindlicher, da z.B. der Hebelarm 11 verschmutzen und blockieren könnte.

Die Gebrauchsmusterschrift DE 89 14 732 U1 offenbart einen weiteren Kopfabstreifer, der zwei Drehachsen aufweist, die parallelogrammartig miteinander verbunden sind, wobei die beiden Drehachsen innerhalb der Querschnittsfläche der Abwurftrommel in Sechs- bis Acht-Uhr-Position angeordnet sind. Durch einen Federmechanismus wird der Abstreifer nach dem Ausschwenken wieder an den Gurt zurückgefedert. Der gezeigte Federmechanismus ist allerdings nicht in der Lage, sich selbsttägig bei Verschleiß der Abstreifkanten entsprechend auszurichten.

Keine der Vorrichtungen im Stand der Technik ist aber im Stande, die Aufgabe der Erfindung zu lösen. Hohe Standzeiten erreicht man trotz hoher Laufgeschwindigkeit dadurch, dass der Abstreifer Hindernissen auf dem Gurtband elastisch ausweicht. Die Wahl der Drehachse ist hierbei entscheidend für die elastische Deformation der Abstreifblöcke, und bestimmt die Belastung sowie die erreichbaren Standzeiten.

Der erfindungsgemäße Abstreifer ist besonders gut geeignet als Vorabstreifer in Kombination mit einem Nach-, Haupt- oder Feinabstreifer, etwa wie er in der, wie er beispielsweise in der EP 2 941 394 B1, der EP 2 212 224 B1 und in der WO 2015/165577 A1 beschrieben ist. Es ergibt sich eine optimale wirtschaftliche Lösung, denn diese Kombination erhöht sowohl die Lebensdauer des einfachen Abstreifers aus vorliegender Erfindung als auch die des Haupt- oder Feinabstreifers. Eine derartige Kombination wird auch in der US 5,016,746 A bereits beschrieben, wobei sich die dort vorgestellte Kombination aber nicht für hohe Gurtlaufgeschwindigkeiten eignet, weil statt einer Vielzahl von Vorabstreiferblöcken nur ein einziger Block Verwendung findet, dessen Systemträger nicht ausschwenken kann, und dessen Oberseite in einem spitzen Winkel am Gurt anliegt.

Die Erfindung wird nachfolgend anhand der Zeichnungen näher erläutert.
- Fig. 1: zeigt eine Übersicht eines erfindungsgemäßen Gurtabstreifers.
- Fig. 2a: zeigt eine Seitenansicht des am Gurtförderband anliegenden Gurtabstreifers.
- Fig. 2b: zeigt eine Seitenansicht des vorgespannten Gurtabstreifers.
- Fig. 2c: zeigt eine Seitenansicht der Vorspannsicherung des Gurtabstreifers.
- Fig. 2d: zeigt eine Seitenansicht des verschlissenen Gurtabstreifers.
- Fig. 3: zeigt eine Seitenansicht des ausgeschwenkten Gurtabstreifers.
- Fig. 4: zeigt Vorabstreifer und Nachabstreifer.
- Fig. 5a: zeigt einen Abstreifblock mit einer Bestückung.
- Fig. 5b: zeigt den Anstellwinkel eines Abstreifblocks an den Gurt.
- Fig. 5c: zeigt einen weiteren Abstreifblock.
- Fig. 5d: zeigt eine Befestigung der Schutzkappe am Abstreifblock.
- Fig. 5e: zeigt eine Befestigung des Abstreifblocks am Systemträger.
- Fig. 5f: zeigt den unter Spannung montierten Abstreifblock.
- Fig. 5g: zeigt den Anstellwinkel eines Abstreifblocks an den Gurt.
- Fig. 6a: zeigt einen Gurtabstreifer, wie Abstreifgut vom Gurt entfernt wird.
- Fig. 6b: zeigt einen Gurtabstreifer, der sich unter Last zusammenbiegt.
- Fig. 7a,d: zeigen jeweils einen Gurtabstreifer kurz vor dem Auftreffen eines Gurtfehlers.
- Fig. 7b,e: zeigen jeweils einen Gurtabstreifer beim Auftreffen eines Gurtfehlers.
- Fig. 7c,f: zeigen jeweils das Ausweichen eines Abstreifblocks beim Passieren eines Gurtfehlers.
- Fig. 8a,b: zeigen jeweils die Schwenkbewegung beim Ausschwenken und Zurückfedern eines Abstreifblocks.
- Fig. 9a: zeigt eine zweistufige Federung mit Dämpfung der Ausschwenkvorrichtung.
- Fig. 9b: zeigt die Federvorrichtung 6 detailliert.
- Fig. 9c: zeigt die Federvorrichtung 6 in einer alternativen Form detailliert.
- Fig. 10a,b,c,d: zeigen 4 beispielhafte Anordnungen des Abstreifersystems.

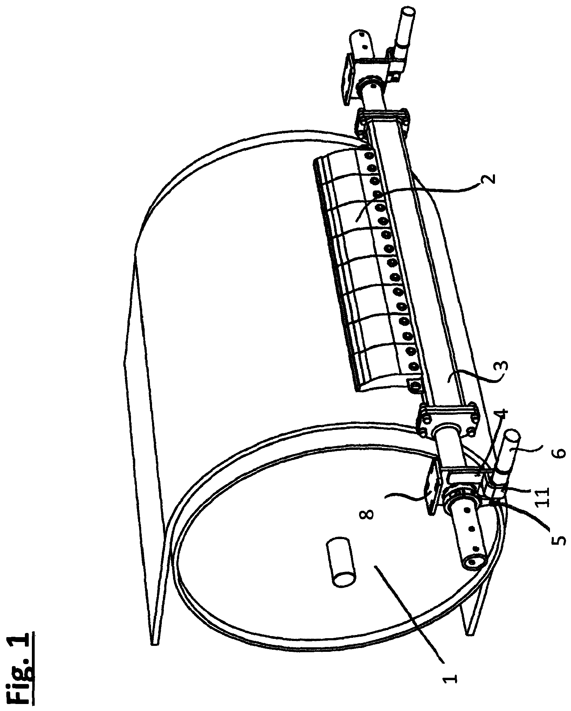

Fig. 1 zeigt eine mögliche Ausführungsvariante des erfindungsgemäßen Gurtabstreifers in einer Übersicht. Mehrere Abstreifblöcke 2 sind auf einem Träger 3 befestigt, und der Träger 3 ist mit einer Trägerhalterung 4 an beiden Seiten des Gurtförderers an der Träger-Drehachse 5 drehbar aufgehängt, wobei die Träger-Drehachse 5 in einer Konsole 8 gelagert ist. Eine Federvorrichtung 6 ist über die Trägerhalterung 4 und eine mit der Träger-Drehachse 5 an der Konsole 8 gelenkig befestigt. Dabei sind die Konsolen 8 mit der Gurtbandgerüstkonstruktion fest verbunden und die Federvorrichtung 6 ist in einer Fixierung 11 drehbar an der Konsole 8 befestigt. Die Konsole 8 sowie die Federvorrichtung 6 können in einem Gehäuse eingehüllt sein, damit sie vor den vom Gurt abfallenden Schmutzpartikeln geschützt sind.

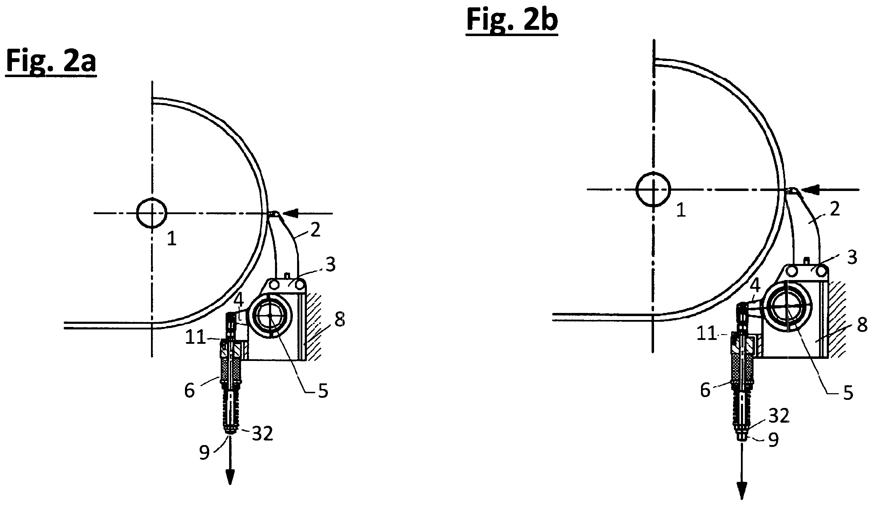

Fig. 2a zeigt den Abstreifer im Neuzustand. Im Neuzustand entspricht die Andruckstelle der Abstreifblöcke 2 auf dem Gurt der Drei-Uhr-Position ohne Vorspannung. Die Abstreiferblöcke 2 liegen lose am Fördergurt an.

Fig. 2b zeigt den Abstreifer im Neuzustand mit Vorspannung. Die Einstellmuttern 32 des Federbolzens 9 wurden hierbei etwas angezogen. Die Andruckkraft der Abstreiferblöcke ergibt sich aus der Federkraft der Einstellfeder und den Hebelübersetzungen der Trägerhalterung 4 um die Träger-Drehachse 5.

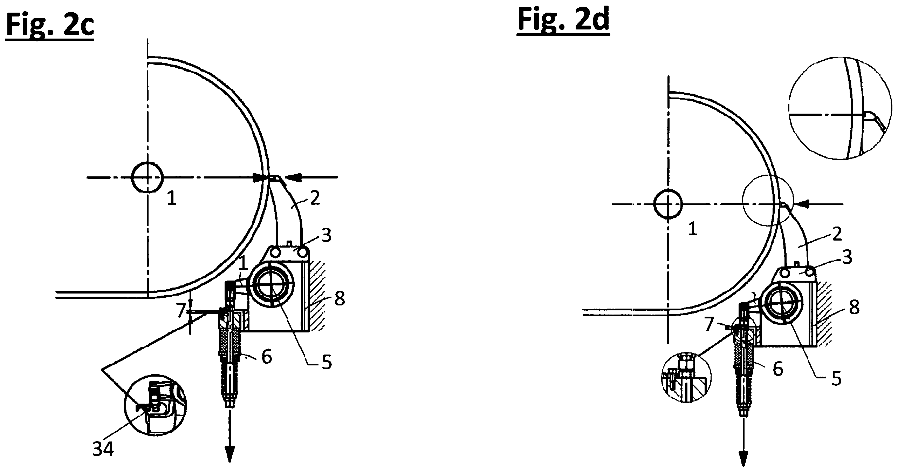

Fig. 2c zeigt den Abstreifer im Neuzustand mit Vorspannung und Vorspannsicherung 34. Die Vorspannsicherung 34 wird hierfür im Ausschnittdetail gezeigt. Die Distanz, die sie auf dem Federbolzen 9 sichert, entspricht der Verschleißreserve 7, diese lässt sich im Neuzustand ermitteln und entsprechend einstellen. Sobald das Abstreifersystem montiert ist und die Abstreifblöcke spannungsfrei am Fördergut anliegen, wird die Vorspannsicherung 34 gelöst und ausgeschwenkt. Die Federvorrichtung kann dann Zugspannung aufbauen und auf die Andrücklinie der Gurtabstreifer übertragen.

Fig. 2d zeigt den Abstreifer im verschlissenen Zustand, hierbei ist die Verschleißreserve 7 vollständig aufgebraucht. Der Abstreifer liegt ohne Andruck am Gurtförderband an und muss ausgetauscht werden.

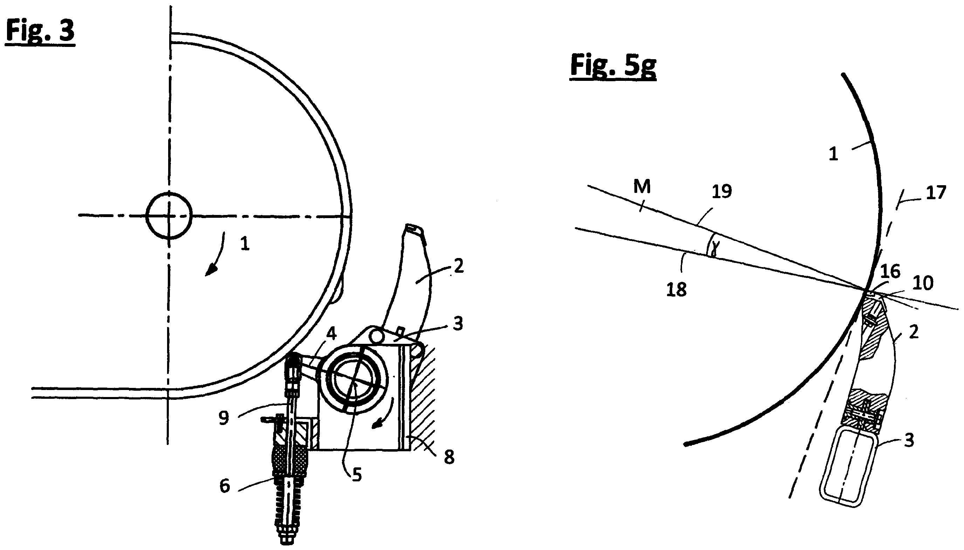

Fig. 3 zeigt den Abstreifer in der Ausweichstellung. Bei eventuellen Stößen von größeren Hindernissen wie Gurtverbindern oder Gurtfehlern dreht der Träger 3 mitsamt seiner Abstreifblöcke 2 um die Träger-Drehachse 5 gegen den Federdruck der Feder in Drehrichtung der Abwurftrommel 1, und schwenkt augenblicklich aus, um den Hindernissen auszuweichen. Anschließend schwenkt er durch die sich wieder entspannende Feder in seine ursprüngliche Stellung zurück, und die Abstreifblöcke 2 werden wieder federnd gegen den Gurt angedrückt. Bei kleinen und abstreifbaren Hindernissen bewirkt die elastische Verformung der Abstreifblöcke bereits ein ausreichendes Ausweichen, ohne dass die Träger-Drehachse mit den anderen Abstreifblöcken vom Gurt abgehoben werden muss.

Bei einer hohen Laufgeschwindigkeit des Gurts findet der gesamte Ausschwenkvorgang im Zehntelsekundenbereich statt, während die elastische Verformung der Abstreifblöcke, die den Ausschwenkvorgang einleitet, im Millisekundenbereich abläuft. Trotz einer hohen Gurtlaufgeschwindigkeit bleiben daher die aufgrund von Hindernissen ungereinigten Gurtteile gering.

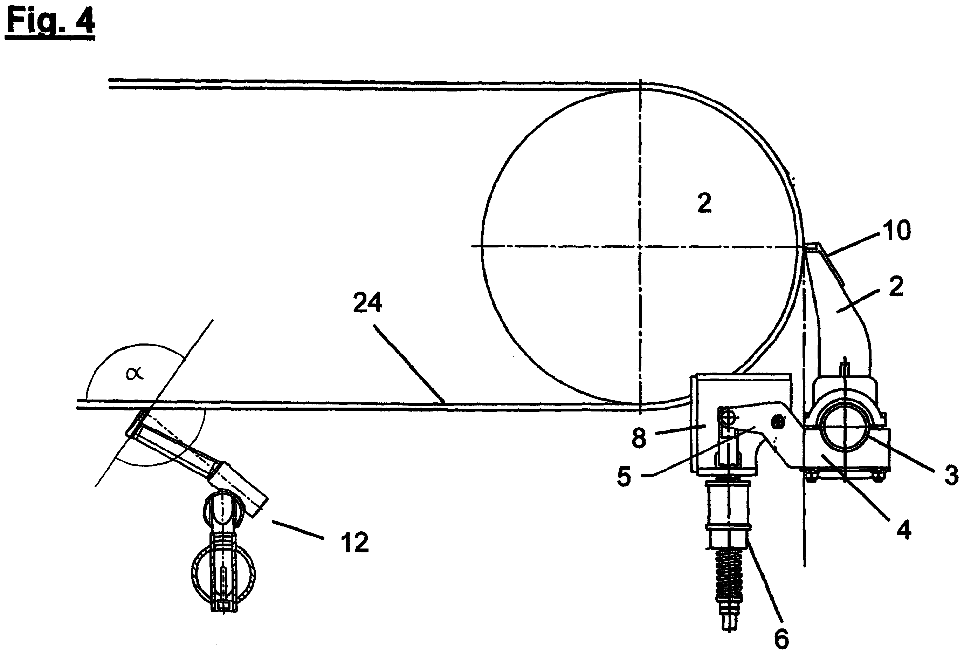

Fig. 4 zeigt einen Abstreiferblock 2 mit einer alternativen Trägerhalterung und Federung in seiner Funktion als Vorabstreifer 2 zusammen mit einem typischen Nachabstreifer 12. Die beiden Abstreifer 2, 12 bilden hierbei ein System für hohe Gurtlaufgeschwindigkeiten. Während der Vorabstreifer 2 die groben Verschmutzungen vom Gurt 24 stößt und dabei systembedingt Reste an Verschmutzungen am Gurt belässt, liegt der Nachabstreifer 12 ziehend-schälend am Gurt 24 an und übernimmt die Feinreinigung. Diesen ziehend-schälenden Ansatz der Abstreifkante des Nachabstreifers 12 erkennt man an dem stumpfen Winkel α zwischen Abstreifkante und Gurt.

Hierbei liegt der Vorabstreifer direkt an der Abwurftrommel an, die ein elastisches Ausweichen des Gurtes nicht zulässt. Auch aus diesem Grund sind kaum Andrückkräfte des Vorabstreifers an den Gurt erforderlich, auch wenn diese unschädlich sind, es ist lediglich sicherzustellen, dass kein Zwischenraum zwischen Vorabstreifer und Gurt entstehen kann.

Vom Nachabstreifer müssen danach nur noch geringe Restmengen abgeschält werden, vor allem die bei hohen Gurtlaufgeschwindigkeiten auftretenden enormen Belastungen durch grobes Fördergut treten wegen des Vorabstreifers beim Nachabstreifer nicht mehr auf. Der Nachabstreifer kann deshalb besonders leicht, d.h. mit geringen trägen Massen im Schneidenbereich, ausgelegt werden, was einerseits zu einem herausragenden Reinigungsergebnis führt und andererseits stark verschleißverringernd ist. Auch hier ist nur ein geringer Andruck an den Gurt erforderlich, der sonst auch, da er im Untertrum frei hängt, eine Gegendruckrolle erfordern würde. Auf diese Weise können die Standzeiten, die üblicherweise auf die Laufkilometer bezogen werden, so deutlich gesteigert werden, dass die Betriebsdauer zwischen verschleißbedingten Wechseln von Gurtabstreifermodulen trotz der Erhöhung der Gurtlaufgeschwindigkeit konstant gehalten oder sogar verlängert werden kann.

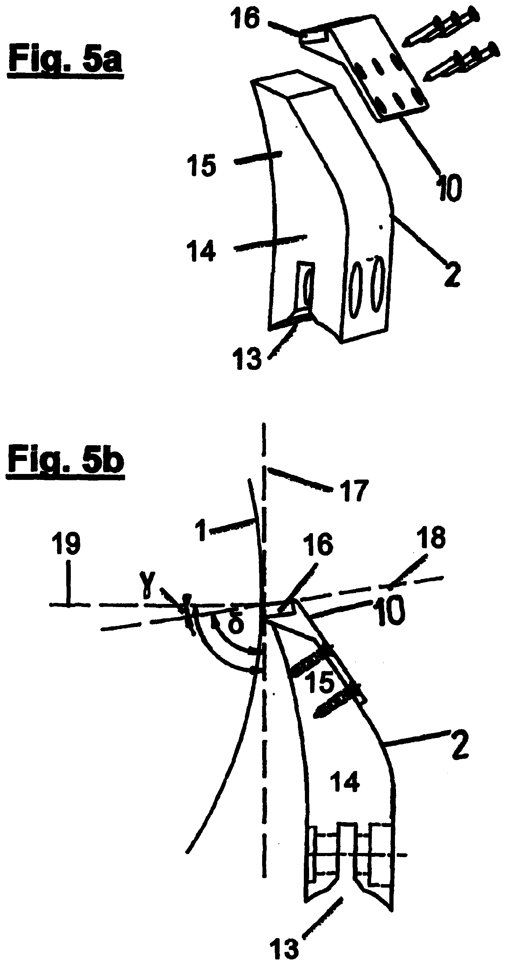

Fig. 5a zeigt einen Abstreifblock 2 und eine Bestückung 10, wobei die Bestückung 10 mit vorgesehenen Bohrungen zum Befestigen auf dem Abstreifblock 2 versehen sind. Idealerweise ist die Bestückung 10 aus verschleißfestem Hartmetall oder Edelstahl hergestellt, die an der Oberseite des Abstreifblocks angebracht ist. Zu erkennen sind die vier funktionellen Abschnitte des Abstreifblocks 2: Die Systemträgerbefestigung 13 erfolgt nach herkömmlichen Methoden, wie sie beispielsweise in der DE 198 56 338 B4 beschrieben ist. Darüber befindet sich der Dämpfungsabschnitt 14, der bei hohen Gurtlaufgeschwindigkeiten die wichtige Funktion hat, die kinetische Energie der Stöße des angebackenen Förderguts abzubauen. Dieser Dämpfungsabschnitt 14 wird vorwiegend federnd auf Stauchung belastet. Darüber befindet sich der Biegeabschnitt 15, bei dem sich der Querschnitt verjüngt, außerdem kann der Biegeabschnitt 15 leicht in Richtung der Abwurftrommel 1 geneigt sein. Dieser Biegeabschnitt ist so ausgestaltet, dass er sich sowohl nach innen als auch nach außen biegen lässt. Auf diese Weise wird erreicht, dass Stöße, die zum Abschlagen von angebackenem Fördergut führen, eine leichte Biegung um wenige Millimeter zum Gurt hin bewirken, der durch die Stöße übertragene Impuls ist gegen den Gurt gerichtet. Der Gurtabstreiferblock hebt in diesem Fall nicht vom Gurt ab.

Auf der anderen Seite wird der Biegeabschnitt federnd nach außen gebogen, sobald angebackenes Fördergut oder ein Gurtfehler dazu führt, dass der Abstreifblock ausweichen muss. Biegeabschnitt und Dämpfungsabschnitt sind in Form und Abmessungen typischerweise so ausgeführt, dass die Federkonstante der Biegungen nach außen etwa vier bis acht mal so klein ist, wie die Federkonstante der entsprechenden Stauchung, im Idealfall ist die Federkonstante für seitliche Auslenkungen fünf bis sechs mal so klein wie die auf Stauchung. Das bedeutet, dass deutlich kleinere Kräfte zum Ausweichen des Abstreifblocks führen, wenn ein Gurtfehler dabei ist, den Abstreiferblock zu passieren.

Auf der Oberseite des Abstreiferblocks 2 ist die Schutzkappe 16 angeordnet, die baulich mit der Bestückung 10 eine Einheit bilden kann, aber nicht muss. Sie wird mit Schrauben oder Dübeln am Biegeabschnitt befestigt, ohne aber die Biegung zu beeinflussen. Sie biegt sich nicht mit.

Fig. 5b zeigt im Seitenschnitt die Winkelanordnung der Schutzkappe 16 gegenüber der Gurtoberfläche 1. Hierbei wird am dem Ort, an dem der Abstreiferblock an der Abwurftrommel anliegt, die Tangente 17 betrachtet, die gegenüber der Ebene 18 der Oberseite der Schutzkappe 16 um einen Winkel δ geneigt ist, bzw. um einen Winkel γ gegenüber der Ebene 19 durch die Mittelachse der Abwurftrommel. Hierdurch wird bewirkt, dass durch das auftreffende Abstreifgut und die leicht nickende Einwärts-Biegebewegungen sowie auch der leicht abrasive feine Restfilm die Abstreifkante der Schutzkappe 16 stets abgerundet wird, wobei diese Effekte aber nur tendenziell in Erscheinung treten, und weshalb sich keine scharfe Kante ausbilden kann. Ein Hacken beim Zurückfedern mit einer verbundenen Beschädigungswirkung ist daher sicher ausgeschlossen. Der Winkel δ ist dabei so groß gewählt, dass auftreffendes Abstreifgut nicht zu einem Wegdrücken nach außen führt. Im Normalfall beträgt der Winkel 75 bis 89 Winkelgrad.

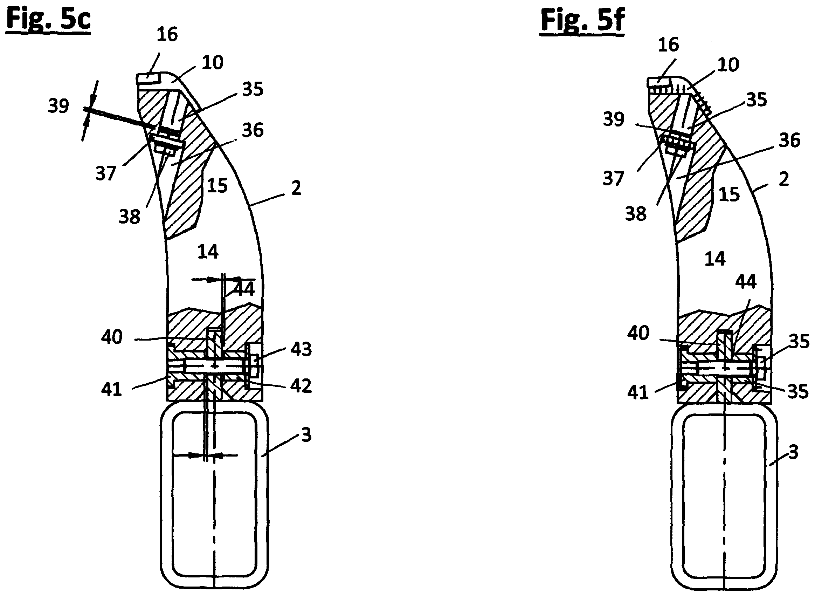

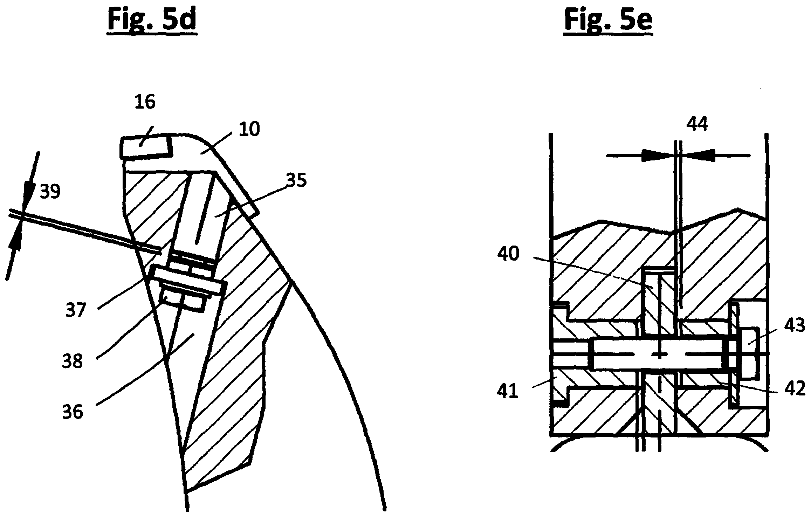

Die Fig. 5c bis 5g zeigen einen alternativen Abstreiferblock 2 mit verbesserten Befestigungen. Fig. 5c zeigt dabei eine Übersicht mit der gewinkelten Edelstahlabdeckung 10, an deren Andrückkante eine Hartmetalllamelle 16 angebracht ist. auf die Innenseite der Edelstahlabdeckung sind Hülsen 35 aufgeschweißt, die in Bohrungen 36, die in das Dämpfungsmaterial gebohrt sind, eingesteckt werden. Die Hülsen 35 weisen in ihrem Inneren ein Gewinde auf, die Bohrungen 36 weisen einen Absatz auf, in den Sicherungsscheiben 37 eingelegt werden können. Vorzugsweise verwendet man hier Sicherungsscheiben 37, die gegen Lockerung gesichert sind, wie z.B. Nordlock-Scheiben. In die Hülsen 35 werden Schrauben 38, vorzugsweise Dehnschrauben, eingeschraubt. Zwischen den Hülsen 35 und den Sicherungsscheiben 37 ist ein definierter Abstand 39 vorgesehen, der auf die Elastizitätseigenschaften des Dämpfungsmaterials abgestimmt ist. Beim Festziehen der Schrauben 38 wird sowohl die Schraube 38 als auch das umgebende Dämpfungsmaterial unter Spannung gesetzt und der Abstand 39 schließt sich. Auf diese Weise wird verhindert, dass sich unter den Verbiegungen des Abstreifblocks und den ständigen Schwingungen die Schutzkappe abheben kann und es wird außerdem verhindert, dass sich die Verbindung lockert und löst, was zur Zerstörung des Abstreifersystems führen könnte. Die Befestigung der Schutzkappe wird in Fig. 5d weiter vergrößert gezeigt.

Fig. 5c zeigt auch die Befestigung der Abstreiferblöcke 2 mit dem Systemträger 3. Dieses Befestigungssystem besteht aus Nut-und-Feder 40. Hierbei weist der Systemträger 3 drei Bohrungen auf, in die Hülsen 41 mit einem Absatz eingeschoben wird, und die mit Schrauben 43 festgezogen wird. Die Schrauben 43, die auch als Dehnschrauben ausgeführt werden können, werden über Sicherungsscheiben 42, beispielsweise Nordlock-Sicherungen, festgezogen, wobei sich ein Abstand 44 schließt, was zu einer gewünschten Vorspannung führt. Wie bei der Schutzkappe 10 wird hierdurch verhindert, dass sich die Verbindung lockert und löst, was zur Zerstörung des Abstreifersystems führen könnte. Die Befestigung am Systemträger wird in Fig. 5e weiter vergrößert gezeigt.

Fig. 5f zeigt den Abstreiferblock 2 im verspannten Zustand, bei dem die Abstände 39 und 44 geschlossen sind.

Fig. 5g zeigt den Abstreiferblock 2, der in 4-Uhr-Position am Gurtförderband G anliegt. Eine Ebene 18, die auf der Abdeckkappe anliegt, verläuft unterhalb der Mittelachse M der Abwurftrommel 1 und bildet mit einer Ebene, die durch die Mittelachse M gebildet wird, einen spitzen Winkel γ. Dieser spitze Winkel γ beträgt üblicherweise zwischen 1 und 15 Grad, im Idealfall etwa 5 Grad.

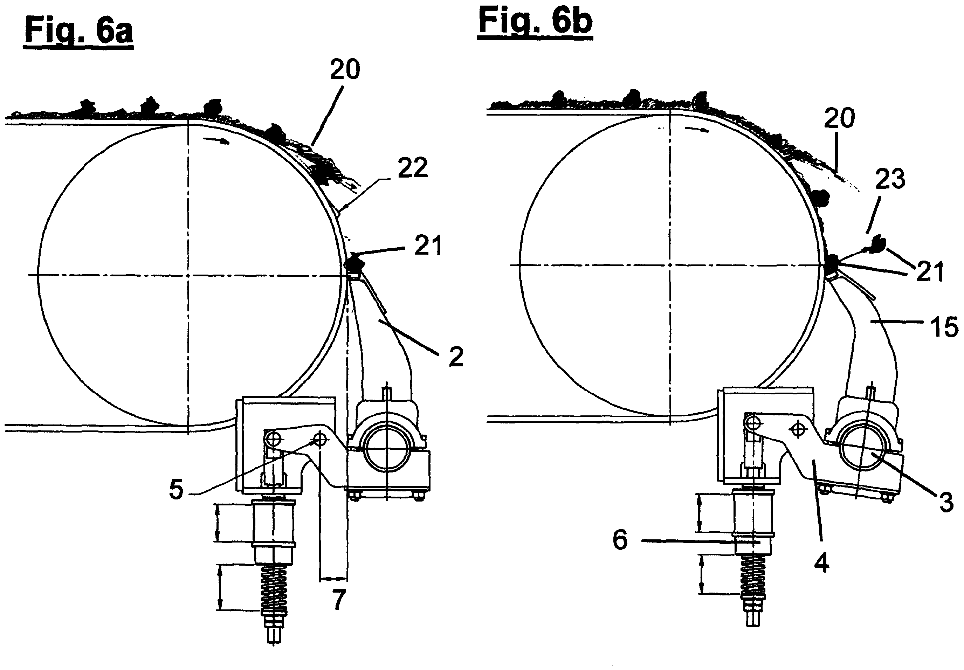

Fig. 6a und 6b zeigen, wie Abstreifgut 20 vom Abstreiferblock 2 entfernt werden. In Fig. 6a nähert sich eine Anbackung 21 der Schutzkappe 16, wohingegen der Gurtfehler 22 den Abstreiferblock 2 noch nicht erreicht hat. In Fig. 6b stößt die Anbackung 21 auf die Schutzkappe 16, worauf sich der Biegeabschnitt 15 nach innen biegt. Hierbei wird die Anbackung 21 gelöst und in Pfeilrichtung 23 weggeschleudert.

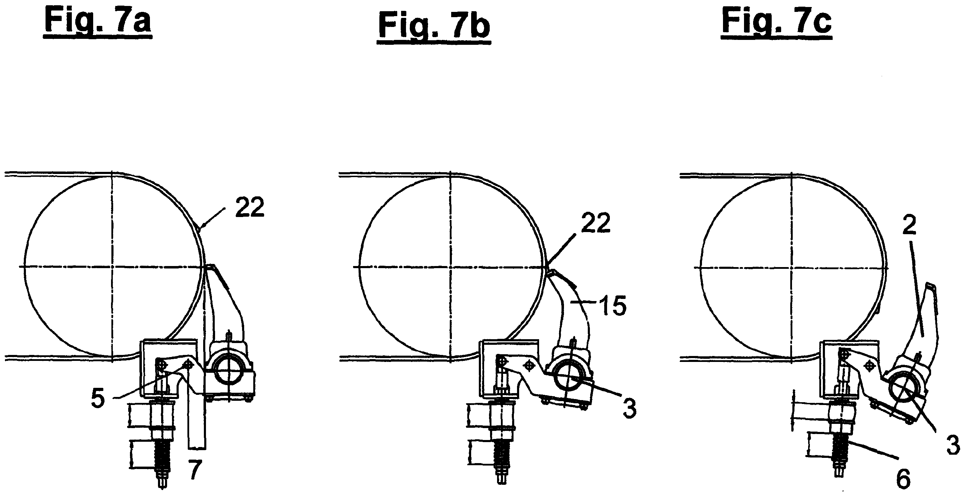

Fig. 7a, 7b und 7c zeigen demgegenüber, wie der Abstreiferblock 2 einem Gurtfehler 22 ausweicht. Als Gurtfehler werden hierbei alle Erhebungen oder so fest mit dem Gurt verbundene Objekte verstanden, deren Abstreifen nicht möglich ist. Zunächst findet eine erste Biegung des Biegeabschnitts 15 zur Innenseite hin wie bei einer Anbackung statt. Sobald der Gurtfehler 22 an der Schutzkappe 16 ist, bewirkt die Vorspannung der Biegung ein schnelles Ausschwenken des gesamten Abstreiferblocks 2 zusammen mit dem Träger 3 und somit auch den übrigen Abstreifblöcken 2 um die Träger-Drehachse 5 mittels der Trägerhalterung 4. Dieses Ausschwenken ist in Fig. 7c überzeichnet dargestellt, tatsächlich erfolgt das Ausschwenken nur insoweit, wie es nötig ist, um dem Gurtfehler 22 auszuweichen. Bei größeren Gurtfehlern dreht sich die Biegerichtung des Biegeabschnitts 15 dabei um, der Gurtabstreiferblock 2 wird dann nach außen gebogen. Da die Biegekraft beim Passieren eines Gurtfehlers 22 nicht mehr stauchend, sondern als seitliche Biegung erfolgt, ändert sich die Federwirkung und es entsteht ein Drehmoment. Dieses Drehmoment wirkt auf den Träger 3 und die Trägerhalterung 4.

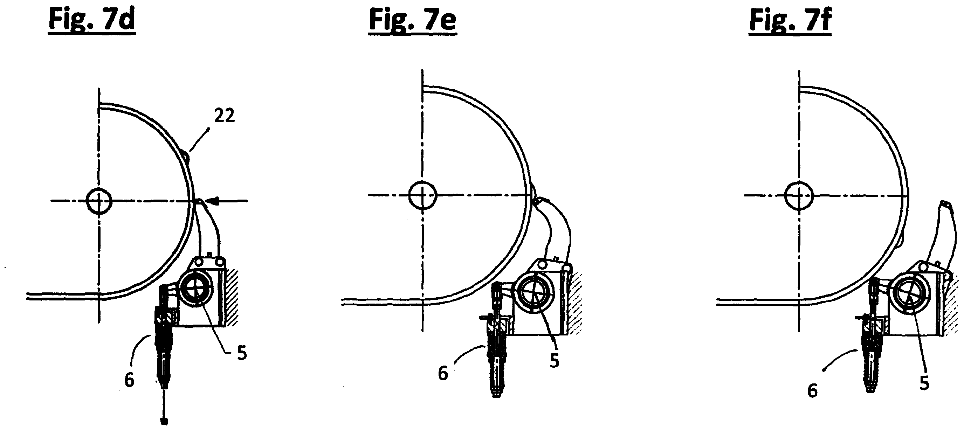

Die Fig. 7d, 7e, und 7f zeigen dasselbe Ausweichverhalten mit einem alternativen, verbesserten Gurtabstreifer und einer alternativen Trägerhalterung.

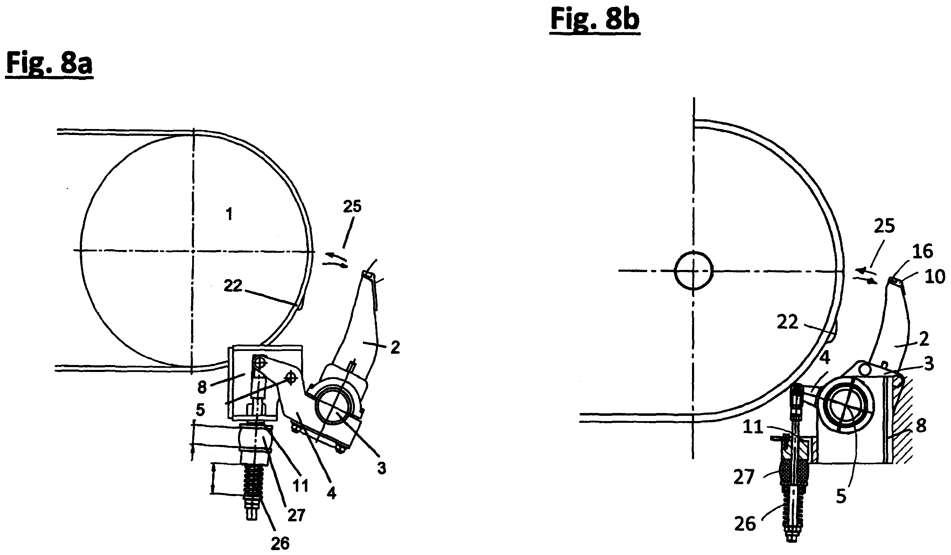

Fig. 8a zeigt, wie sich Träger 3 und Trägerhalterung 4 aufgrund des aufgeprägten Drehmoments verhalten. Zunächst wird das Drehmoment durch den Abstreiferblock 2 auf die Achse des Trägers 3 übertragen und von dort auf die Trägerhalterung 4, die dadurch um die Träger-Drehachse 5 gedreht wird. Die Federvorrichtung 6 wird durch die Einstellfeder 26 und die Dämpfungsfeder 27 gebildet und fängt das Drehmoment schrittweise ab. Hierbei wird zunächst die Einstellfeder 26 betätigt, die den Andruck des Abstreiferblocks 2 an den Gurt bestimmt. Diese Einstellfeder 26 ermöglicht ein besonders schnelles und weites Ausweichen, was aufgrund der hohen Gurtlaufgeschwindigkeit erforderlich ist. In einem zweiten Schritt wird durch eine Dämpfungsfeder 27, die typischerweise aus Gummi oder Polyurethan gefertigt ist, eine weitere Federung unter sehr starker Dämpfung ausgeführt, die Ausweichweite wird hierbei stark eingeschränkt. Die Dämpfung hat dabei die Aufgabe, die erhebliche kinetische Energie, die durch den Gurtfehler 22 auf den Federmechanismus übertragen wird, möglichst umfassend abzubauen, damit die Belastungen auf die Konsole 8, an der die Träger-Drehachse 5 und die Fixierung 11 der Federvorrichtung 6 einwirken, weder zu plastischen Verformungen noch zu längerem Ausschwingen führen. Nach dem Ausweichen des gekrümmten Abstreiferblocks 2 wird er in gestreckter Form wieder an den Gurt zurückgeführt, was durch die Aus- und Einschwenkrichtung 25 dargestellt ist.

Fig. 8b zeigt dasselbe Ausweichverhalten mit einem alternativen, verbesserten Gurtabstreifer und einer alternativen Trägerhalterung.

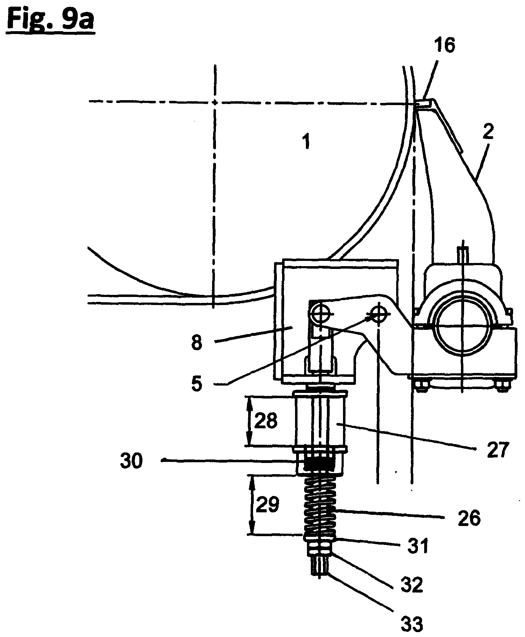

Fig. 9a zeigt eine Ausführungsvariante der Federvorrichtung 6 detaillierter. Hierbei wird die Einstellfeder 26, die als Spiralfeder aus Federstahl ausgebildet ist, durch Einstellmuttern 32 auf einem Kopplungselement 33, das als Gewindestange ausgeprägt ist, über einen Absatz 31 der Einstellfeder 26 auf einen leichten Anpressdruck voreingestellt. Beim Zusammendrücken der Einstellfeder 26 im Falle eines Ausweichvorgangs schiebt die Oberseite der Einstellfeder 26 den Absatz 30 der Dämpfungsfeder nach oben. Dieser Absatz 30 der Dämpfungsfeder greift unten an die Dämpfungsfeder an und drückt sie gegen die Fixierung 11 zusammen. Die Fixierung 11 verbindet die Feder mit der Konsole 8. Der Federweg der Dämpfungsfeder 27 ist vergleichsweise kurz, was das Rückfedern des Ausschwenkvorgangs insgesamt beschleunigt und dazu führt, dass der Abstreiferblock schon nach sehr kurzer Zeit wieder am Gurt anliegt.

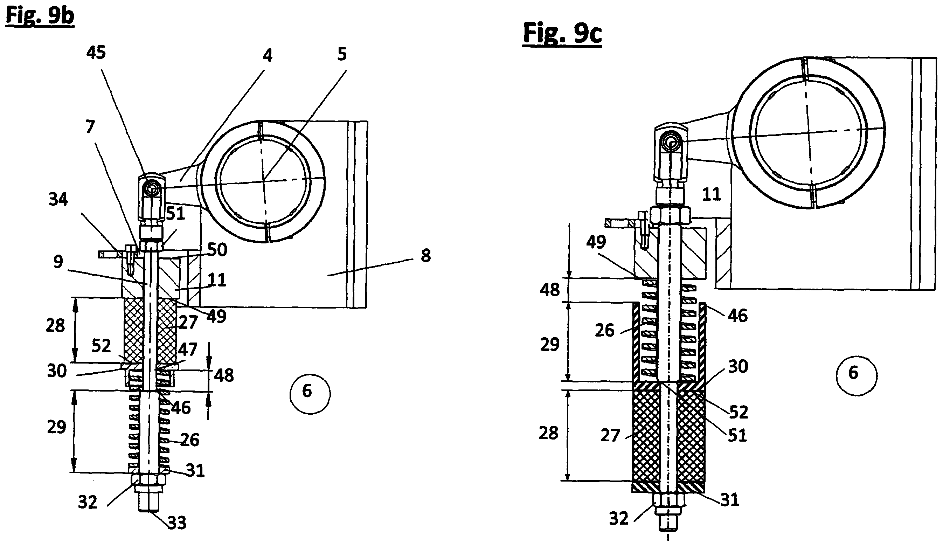

Fig. 9b zeigt die andere Ausführungsvariante der Federvorrichtung 6 detaillierter. Hierbei wird über die Trägerhalterung 4 Zug über die Kopplungsvorrichtung 45 auf den Federbolzen 9 ausgeübt. Am Fuß des Federbolzens 9 wird diese Zugkraft von einem Kopplungselement 33, das als Hülse über dem Federbolzen 9 ausgeführt ist, durch eine Einstellmutter 32 und einen Absatz 31 der Einstellfeder 26 auf die Einstellfeder 26 übertragen. Am Ende dieser Hülse befindet sich ein Absatz 46, der den Durchmesser auf den der Zugstange 9 reduziert. Die Einstellfeder 26 liegt an der Fläche der Einstellfederführung 47 an, der gesamte Federweg 48 der Einstellfeder 26 ergibt sich aus dem Abstand des Absatzes 46 zur Einstellfederführung 47. Sofern die Hülse am Kopplungselement schraubbar eingestellt werden kann, ist es möglich, diesen Federweg 48 einzustellen, falls die Hülse mit der Zugstange nicht lösbar befestigt ist, kann der Federweg 48 durch Zwischenlegscheiben entsprechend voreingestellt werden. Über das Weglängenverhältnis an der Träger-Drehachse 5 ergibt sich aus diesem Federweg 48 der Einstellfeder die Ausschwenkweite des Abstreifblocks 2.

Ist dieser Federweg 48 ausgeschöpft, indem der Absatz 46 an die Einstellfederführung 47 stößt, überträgt der Absatz 30 der Dämpfungsfeder 27 den weiteren Stoß auf die Dämpfungsfeder 27, die sich nur noch geringfügig dabei zusammendrückt. Die Dämpfungsfeder 27 drückt auf die Fixierung 11, die mit der Konsole 8 verbunden ist. Bei beiden Federn sind die Federwege gegenüber der gesamten jeweiligen Federlängen 28 und 29 klein.

Mittels einer ausschwenkbaren Vorspannsicherung 34, die in Fig. 9c im ausgeklappten Zustand gezeigt ist, kann während der Montage eine definierte Vorspannung durch die Einstellfeder 26 mittels der Einstellmutter 32 eingestellt werden. Hierdurch ergibt sich die einstellbare Verschleißreserve 7, die über das Hebelverhältnis den maximal zulässigen Verschleiß des Abstreiferblocks limitiert, beispielsweise auf die Größe der Hartmetalllamelle 16 sofern eine solche vorgesehen wird.

Statt einem Federbolzen 9 mit aufgebrachter Hülse als Kopplungselement 33 kann auch eine Zugstange aus gedrehtem Vollmaterial verwendet werden, bei der der Absatz 46 und auch weitere Strukturierungen wie Gewinde vorgenommen sind. Selbstverständlich kann die Federvorrichtung 6 auch mit einer Abdeckung versehen werden.

Da die beiden Federn 26 und 27 in Serie geschaltet sind, ist es auch möglich, beide konstruktiv miteinander zu vertauschen, wobei die jeweiligen Absätze entsprechend angepasst werden.

Fig. 9c zeigt eine solche alternative Ausführungsform, bei der die beiden Federn 26 und 27 in ihrer Position vertauscht sind. Die Beschreibung der Fig. 9c gilt hier sinngemäß analog.

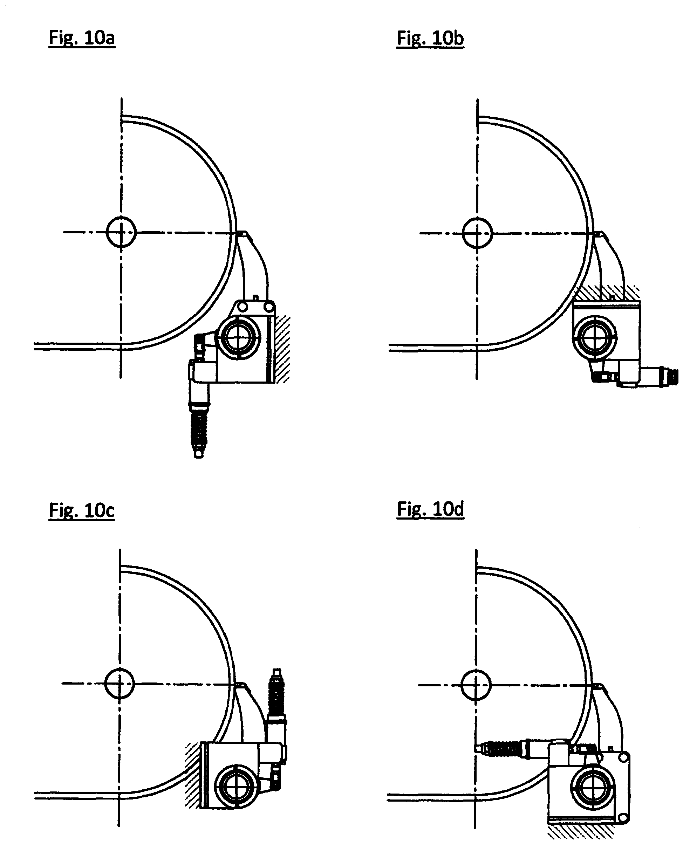

Fig. 10a bis 10d zeigen beispielhaft die Gestaltungsmöglichkeiten, wie die Konsole 8 und die daraus folgende Orientierung der Federvorrichtung räumlich positioniert werden kann, wobei auch alle Zwischenmöglichkeiten wählbar sind.

### Bezugszeichenliste

- 1: Abwurftrommel
- 2: Abstreifblock
- 3: Träger
- 4: Trägerhalterung
- 5: Träger-Drehachse
- 6: Federvorrichtung
- 7: Verschleißreserve
- 8: Konsole
- 9: Federbolzen
- 10: Bestückung
- 11: Fixierung
- 12: Nachabstreifer
- 13: Systemträgerbefestigung
- 14: Dämpfungsabschnitt
- 15: Biegeabschnitt
- 16: Schutzkappe
- 17: Tangente
- 18: Ebene der Oberseite der Schutzkappe
- 19: Ebene durch Mittelachse der Abwurftrommel
- α,δ,γ: Winkel
- 20: Abstreifgut
- 21: Anbackung
- 22: Gurtfehler
- 23: Pfeilrichtung
- 24: Fördergurt
- 25: Aus- und Einschwenkrichtung
- 26: Einstellfeder
- 27: Dämpfungsfeder
- 28: Federlänge Dämpfungsfeder
- 29: Federlänge Einstellfeder
- 30: Absatz der Dämpfungsfeder
- 31: Absatz der Einstellfeder
- 32: Einstellmuttern
- 33: Kopplungselement
- 34: Vorspannsicherung
- 35: Hülse
- 36: Bohrung
- 37: Sicherungsscheibe
- 38: Schraube
- 39: Abstand
- 40: Nut-und-Feder
- 41: Hülse
- 42: Sicherungsscheibe
- 43: Schraube
- 44: Abstand
- 45: Kopplungselement
- 46: Absatz
- 47: Einstellfederführung
- 48: Federweg Einstellfeder
- 49: Ende Dämpfungsfeder
- 50: Andere Seite der Fixierung
- 51: Begrenzungsabsatz
- 52: Seite der Dämpfungsfeder
- M: Mittelachse der Umlenkrolle
- G: Gurtförderband

## Patentansprüche

1. Abstreifersystem für den von einer Abwurftrommel (1) gebildeten Umlenkbereich von Gurtförderbändern mit einer Abwurftrommel (1) und einem Gurtförderband (G), umfassend
- mindestens einen einstellbaren und federnd gelagerten Systemträger (3) quer zur Laufrichtung des Gurtförderbandes (G),
- an welchem einer oder mehrere Abstreifblöcke (2) aus Elastomer nebeneinander in austauschbarer Weise befestigt sind, wobei
- der Systemträger (3) über eine Trägerhalterung (4) an beiden Seiten der Abwurftrommel (1) drehbar um eine Träger-Drehachse (5) aufgehängt ist, wobei
- der Träger-Drehachse (5) mittels einer Federvorrichtung (6) ein vorgebbares Drehmoment aufgeprägt wird, welches entgegen der Drehrichtung der Abwurftrommel (1) gerichtet ist, und
- die Träger-Drehachse (5) eine Drehung des Systemträgers (3) um einen solchen Drehwinkel zulässt, dass eine Ausweichbewegung des Systemträgers (3) mitsamt seiner Abstreifblöcke (2) erfolgen kann,
**dadurch gekennzeichnet, dass**
- die Federvorrichtung (6) aus einer Einstellfeder (26), einer mit ihr gekoppelten Dämpfungsfeder (27), und einem als Zugstange ausgebildeten Federbolzen (9), der beide Federn (26,27) mit der Trägerhalterung verbindet, gebildet ist,
- und der Federbolzen (9) einen Absatz (46) aufweist, der die Dämpfungsfeder (27) erst betätigt, wenn die Einstellfeder (26) einen vorgebbaren Federweg (48) zurückgelegt hat.

2. Abstreifersystem nach Anspruch 1, **dadurch gekennzeichnet, dass** die Federvorrichtung (6) aufweist
- eine Spiralfeder, die als Einstellfeder (26) wirkt,
- eine Elastomerfeder, die als Dämpfungsfeder (27) wirkt, wobei
- der Federbolzen (9) an seinem ersten Ende mit der Trägerhalterung verbunden ist und an seinem zweiten Ende eine Einstellmöglichkeit (32) für einen Anschlag (31) aufweist,
- wobei der Anschlag (31) geeignet ist, das eine Ende der Einstellfeder (26) aufzunehmen,
- am anderen Ende der Einstellfeder (26) ein weiterer Absatz (30) angebracht ist, der die Einstellfeder (26) mit der Dämpfungsfeder (27) verbindet,
- am Federbolzen (9) ein Anschlag (46) zwischen Einstellfeder (26) und Dämpfungsfeder (27) angebracht ist, der den Federweg (48) der Einstellfeder (26) begrenzt und bei Erreichen dieser Begrenzung an den Absatz (30) schlägt, der gegen die eine Seite (52) der Dämpfungsfeder (27) drückt,
- die Dämpfungsfeder (27) am anderen Ende (49) eine Aufnahme zur Fixierung (11) an der Konsole (8) aufweist,
- und auf der anderen Seite (50) der Fixierung (11) an der Trägerhalterung ein Begrenzungsabsatz (51) am Federbolzen (9) angebracht ist, der die Bewegung des Federbolzens (9) in Richtung der Federn (26, 27) begrenzt.

3. Abstreifersystem nach Anspruch 1, **dadurch gekennzeichnet, dass** die Federvorrichtung (6) aufweist
- eine Spiralfeder, die als Einstellfeder (26) wirkt,
- eine Elastomerfeder, die als Dämpfungsfeder (27) wirkt, wobei
- der Federbolzen (9) an seinem ersten Ende mit der Trägerhalterung verbunden ist und an seinem zweiten Ende eine Einstellmöglichkeit (32) für einen Anschlag (31) aufweist,
- wobei der Anschlag (31) geeignet ist, das eine Ende der Dämpfungsfeder (27) aufzunehmen,
- am anderen Ende (52) der Dämpfungsfeder (27) ein weiterer Absatz (30) angebracht ist, der die Einstellfeder (26) mit der Dämpfungsfeder (27) verbindet,
- am Federbolzen ein Anschlag (46) zwischen Einstellfeder (26) und Dämpfungsfeder (27) angebracht ist, der den Federweg (48) der Einstellfeder (26) begrenzt und bei Erreichen dieser Begrenzung an den Absatz (30) schlägt, der gegen die eine Seite (52) der Dämpfungsfeder (27) drückt,
- die Einstellfeder (26) am anderen Ende (49) eine Aufnahme zur Fixierung (11) an der Konsole (8) aufweist
- und auf der anderen Seite (50) der Fixierung (11) an der Trägerhalterung ein Begrenzungsabsatz (51) am Federbolzen (9) angebracht ist, der eine Bewegung des Federbolzens (9) in Richtung der Federn (26,27) begrenzt.

4. Abstreifersystem nach einem der Ansprüche 1 bis 3, **dadurch gekennzeichnet, dass** als Elastomer Gummi oder ein Polyurethan verwendet wird.

5. Abstreifersystem nach einem der Ansprüche 2 bis 4, **dadurch gekennzeichnet, dass** bei der Aufnahme zur Fixierung (11) eine wegschwenkbare Vorspannsicherung (34) zwischen Fixierung (11) und Absatz (51) angebracht ist.

6. Abstreifersystem nach einem der Ansprüche 1 bis 5, **dadurch gekennzeichnet, dass** die Träger-Drehachse (5) in der Tangente (17) der Abstreiflinie der Abwurftrommel (1) angeordnet ist.

7. Abstreifersystem nach einem der Ansprüche 1 bis 6, **dadurch gekennzeichnet, dass** jeder Abstreifblock (2) eine Oberseite mit einer Schutzkappe (10, 16) aus Metall aufweist, die geeignet ist, auf dem Gurtförderband (G) anzuliegen und federnd an das Gurtförderband (G) gedrückt zu werden.

8. Abstreifersystem nach Anspruch 7, **dadurch gekennzeichnet, dass** jeder Abstreifblock (2) aus den vier Teilabschnitten:
- Befestigung am Systemträger (3),
- darüber anschließenden Quader-förmigen Dämpfungsabschnitt,
- darüber einem sich verjüngenden, trapezförmigen Biegeabschnitt,
- und darüber einer Schutzkappe (10,16), aufgebaut ist.

9. Abstreifersystem nach einem der Ansprüche 7 und 8, **dadurch gekennzeichnet, dass** die Oberfläche des Abstreifblocks (2) und der Schutzkappe (10, 16) am Abstreifpunkt so gestaltet ist, dass die Abstreifwirkung nicht-schälend ist.

10. Abstreifersystem nach einem der Ansprüche 7 bis 9, **dadurch gekennzeichnet, dass** die Dämpfungsmaterialien der Abstreifblöcke (2) Bohrungen (36) zur formschlüssigen Aufnahme von Hülsen (35) sowie an der Innenseite einen Absatz aufweisen, auf den ein Sicherungsring (42) gelegt werden kann.

11. Abstreifersystem nach Anspruch 10, **dadurch gekennzeichnet, dass** eine Schraubverbindung zu den Hülsen (35) mit Dehnschrauben und/ oder Nordlock-Ringen gegen Lockern abgesichert wird.

12. Abstreifersystem nach einem der Ansprüche 7 bis 11, **dadurch gekennzeichnet, dass** Hartmetall oder Edelstahl als Material für die Schutzkappe (10, 16) ausgewählt wird.

13. Kombination aus einem Abstreifersystem nach einem der Ansprüche 1 bis 12 als Vorabstreifer mit einem weiteren Gurtabstreifer als Nachabstreifer (12), wobei beide Abstreifer zusammen ein System aus Vorabstreifer und Nachabstreifer bilden, und der Nachabstreifer aus Abstreifermodulen gebildet ist, die einen Schneidenträger mit einer Abstreiflamelle, die gegenüber dem Gurtförderband (G) in Gurtlaufrichtung einen stumpfen Winkel (α) bildet, und eine Abstreifkörper-Drehachse aufweisen, die sich frei ausrichten kann.

14. Gurtförderer mit einem Gurtförderband (G), einer Abwurftrommel (1) und einem Abstreifersystem für den von der Abwurftrommel (1) gebildeten Umlenkbereich nach Anspruch 9, wobei die Oberfläche des Abstreifblocks (2) und der Schutzkappe (10, 16) am Abstreifpunkt so gestaltet ist, dass die eine Ebene (19), die von der Mittelachse (M) der Abwurftrommel (1) und der Andrücklinie aufgespannt wird, die andere Ebene (18), die an der Andrücklinie auf die Oberseite der Abstreifblöcke (2) angelegt wird, in einem spitzen Winkel (γ) schneidet, und die andere Ebene (18) dabei unterhalb der Mittelachse (M) der Abwurftrommel (1) verläuft.

## Claims

1. A scraper system for the deflection region of belt conveyors formed of a tripper pulley (1) having a tripper pulley (1) and a belt conveyor (G), comprising
- at least one adjustable and spring-mounted system support (3) transverse to the direction of travel of the belt conveyor (G),
- to which system support one or more scraper blocks (2) made from an elastomer are interchangeably fastened next to one another, wherein
- the system support (3) is suspended in a rotatable manner about a support axis of rotation (5) by way of a support mounting (4) on both sides of the tripper pulley (1), wherein
- a predefinable torque is impressed on the support axis of rotation (5) by means of a spring device (6), which predefinable torque is directed against the direction of rotation of the tripper pulley (1), and
- the support axis of rotation (5) allows a rotation of the system support (3) about such an angle of rotation as to permit a swinging-out movement of the system support (3) together with the scraper blocks (2) thereof,
**characterized in that**
- the spring device (6) is formed from an adjusting spring (26), a damper spring (27) coupled thereto, and a spring bolt (9) configured as a pull rod that connects both springs (26, 27) to the support mounting,
- and the spring bolt (9) has a ledge (46) which only actuates the damper spring (27) if the adjusting spring (26) has covered a predefinable spring travel (48).

2. The scraper system according to claim 1, **characterized in that** the spring device (6) has
- a spiral spring that acts as the adjusting spring (26),
- an elastomer spring that acts as the damper spring (27), wherein
- the spring bolt (9) is connected at the first end thereof to the support mounting and has an adjustment option (32) for a stop (31) at the second end thereof,
- wherein the stop (31) is suitable for receiving the one end of the adjusting spring (26),
- an additional ledge (30) is attached to the other end of the adjusting spring (26), which additional ledge connects the adjusting spring (26) to the damper spring (27),
- a stop (46) between the adjusting spring (26) and the damper spring (27) is attached to the spring bolt (9), which stop limits the spring travel (48) of the adjusting spring (26) and strikes the ledge (30) when this limit has been reached, which ledge presses against the one side (52) of the damper spring (27),
- the damper spring (27) has a receptacle for fixing (11) to the bracket (8) at the other end (49),
- and a limiting ledge (51) is attached to the spring bolt (9) on the other side (50) of the fixing (11) to the support mounting, which limiting ledge limits the movement of the spring bolt (9) towards the springs (26, 27).

3. The scraper system according to claim 1, **characterized in that** the spring device (6) has
- a spiral spring that acts as the adjusting spring (26),
- an elastomer spring that acts as the damper spring (27), wherein
- the spring bolt (9) is connected at the first end thereof to the support mounting and has an adjustment option (32) for a stop (31) at the second end thereof,
- wherein the stop (31) is suitable for receiving the one end of the damper spring (27),
- an additional ledge (30) is attached to the other end (52) of the damper spring (27), which additional ledge connects the adjusting spring (26) to the damper spring (27),
- a stop (46) between the adjusting spring (26) and the damper spring (27) is attached to the spring bolt, which stop limits the spring travel (48) of the adjusting spring (26) and strikes the ledge (30) when this limit has been reached, which ledge presses against the one side (52) of the damper spring (27),
- the adjusting spring (26) has a receptacle for fixing (11) to the bracket (8) at the other end (49),
- and a limiting ledge (51) is attached to the spring bolt (9) on the other side (50) of the fixing (11) to the support mounting, which limiting ledge limits a movement of the spring bolt (9) towards the springs (26, 27).

4. The scraper system according to one of claims 1 to 3, **characterized in that** rubber or a polyurethane is used as the elastomer.

5. The scraper system according to one of claims 2 to 4, **characterized in that** in the region of the receptacle for fixing (11), a preload lock (34) that can pivot away is attached between the fixing (11) and the ledge (51).

6. The scraper system according to one of claims 1 to 5, **characterized in that** the support axis of rotation (5) is arranged on the tangent (17) of the scraping line of the tripper pulley (1).

7. The scraper system according to one of claims 1 to 6, **characterized in that** each scraper block (2) has an upper side having a protective cap (10, 16) made of metal that is suitable for resting on the belt conveyor (G) and for being pressed resiliently against the belt conveyor (G).

8. The scraper system according to claim 7,
**characterized in that**
each scraper block (2) is constructed from the following four portions:
- a fastening to the system support (3),
- a cuboid damping portion adjoining same thereabove,
- a tapering, trapezoidal bending portion thereabove,
- and a protective cap (10, 16) thereabove.

9. The scraper system according to one of claims 7 and 8,
**characterized in that**
- the surface of the scraper block (2) and of the protective cap (10, 16) at the scraping point is designed such that the scraping action is non-paring.

10. The scraper system according to one of claims 7 to 9, **characterized in that** the damping materials of the scraper blocks (2) have holes (36) for positively receiving sleeves (35) as well as a ledge on the inside, onto which a retaining ring (42) can be placed.

11. The scraper system according to claim 10, **characterized in that** a screw connection with the sleeves (35) is secured against loosening by means of expansion screws and/or Nord-Lock rings.

12. The scraper system according to one of claims 7 to 11, **characterized in that** hard metal or stainless steel is selected as the material for the protective cap (10, 16).

13. A combination of a scraper system according to one of claims 1 to 12 as the primary scraper having another belt scraper as the secondary scraper (12), wherein both scrapers together form a system consisting of a primary scraper and a secondary scraper, and the secondary scraper is formed from scraper modules which forms a blade support having a scraper blade that forms an obtuse angle (α) relative to the conveyor belt (G) in the direction of travel, and a scraper head axis of rotation that can be freely oriented.

14. A belt conveyor system having a belt conveyor (G), a tripper pulley (1) and a scraper system for the deflection region formed of the tripper pulley (1) according to claim 9, wherein the surface of the scraper block (2) and of the protective cap (10, 16) at the scraping point is designed such that the one plane (19), which is spanned by the central axis (M) of the tripper pulley (1) and the pressing line, intersects the other plane (18), which is applied to the upper side of the scrapper blocks (2) on the pressing line, at an acute angle (γ), and the other plane (18) extends below the central axis (M) of the tripper pulley (1).

## Revendications

1. Système de raclage pour la zone de déviation formée par un tambour d'éjection (1) de convoyeurs à bande, avec un tambour d'éjection (1) et un convoyeur à bande (G), comportant
- au moins un support de système (3) réglable et monté de façon élastique, transversalement à la direction d'avance du convoyeur à bande (G),
- sur lequel un ou plusieurs blocs de raclage (2) en élastomère sont fixés les uns à côté des autres de manière interchangeable, dans lequel
- le support de système (3) est suspendu de façon rotative autour d'un axe de rotation de support (5) sur les deux côtés du tambour d'éjection (1) par le biais d'une monture de support (4), dans lequel
- un couple de rotation prédéfinissable est appliqué à l'axe de rotation de support (5) au moyen d'un dispositif à ressort (6), le couple de rotation étant orienté contre la direction de rotation du tambour d'éjection (1), et
- l'axe de rotation de support (5) permet une rotation du support de système (3) autour d'un angle de rotation permettant un mouvement alternatif du support de système (3) ensemble avec ses blocs de raclage (2),
**caractérisé en ce que**
- le dispositif à ressort (6) est constitué d'un ressort de réglage (26), d'un ressort d'amortissement (27) accouplé à celui-ci, et d'un boulon de ressort (9) conçu comme une tige de traction, lequel relie les deux ressorts (26, 27) à la monture de support,
- et le boulon de ressort (9) présente un gradin (46) actionnant le ressort d'amortissement (27) seulement lorsque le ressort de réglage (26) a accompli une course de ressort prédéfinissable (48).

2. Système de raclage selon la revendication 1, **caractérisé en ce que** le dispositif à ressort (6) présente
- un ressort hélicoïdal agissant comme ressort de réglage (26),
- un ressort élastomère agissant comme ressort d'amortissement (27), dans lequel
- le boulon de ressort (9) est relié à la monture de support à sa première extrémité et présente une possibilité de réglage (32) pour une butée (31) à sa deuxième extrémité,
- dans lequel la butée (31) est adaptée pour recevoir une extrémité du ressort de réglage (26),
- un autre gradin (30) reliant le ressort de réglage (26) au ressort d'amortissement (27) est fixé à l'autre extrémité du ressort de réglage (26),
- une butée (46) est fixée au boulon de ressort (9) entre le ressort de réglage (26) et le ressort d'amortissement (27), laquelle limite la course de ressort (48) du ressort de réglage (26) et bute contre le gradin (30) lorsque cette limite est atteinte, celui-ci appuyant contre un côté (52) du ressort d'amortissement (27),
- le ressort d'amortissement (27) présente un logement à l'autre extrémité (49), pour la fixation (11) à la console (8),
- et un gradin de limitation (51) est fixé au boulon de ressort (9) de l'autre côté (50) de la fixation (11) sur la monture de support, pour limiter le déplacement du boulon de ressort (9) dans la direction des ressorts (26, 27).

3. Système de raclage selon la revendication 1, **caractérisé en ce que** le dispositif à ressort (6) présente
- un ressort hélicoïdal agissant comme ressort de réglage (26),
- un ressort élastomère agissant comme ressort d'amortissement (27), dans lequel
- le boulon de ressort (9) est relié à la monture de support à sa première extrémité et présente une possibilité de réglage (32) pour une butée (31) à sa deuxième extrémité,
- dans lequel la butée (31) est adaptée pour recevoir une extrémité du ressort d'amortissement (27),
- un autre gradin (30) reliant le ressort de réglage (26) au ressort d'amortissement (27) est fixé à l'autre extrémité (52) du ressort d'amortissement (27),
- une butée (46) est fixée au boulon de ressort entre le ressort de réglage (26) et le ressort d'amortissement (27), laquelle limite la course de ressort (48) du ressort de réglage (26) et bute contre le gradin (30) lorsque cette limite est atteinte, celui-ci appuyant contre un côté (52) du ressort d'amortissement (27),
- le ressort de réglage (26) présente un logement à l'autre extrémité (49), pour la fixation (11) à la console (8),
- et un gradin de limitation (51) est fixé au boulon de ressort (9) de l'autre côté (50) de la fixation (11) sur la monture de support, pour limiter un déplacement du boulon de ressort (9) dans la direction des ressorts (26, 27).

4. Système de raclage selon l'une des revendications 1 à 3, **caractérisé en ce que** du caoutchouc ou un polyuréthane est utilisé comme élastomère.

5. Système de raclage selon l'une des revendications 2 à 4, **caractérisé en ce qu'**une sécurité de précontrainte (34) apte à pivoter à distance est fixée entre la fixation (11) et le gradin (51) au niveau du logement pour la fixation (11).

6. Système de raclage selon l'une des revendications 1 à 5, **caractérisé en ce que** l'axe de rotation de support (5) est disposé dans la tangente (17) de la ligne de raclage du tambour d'éjection (1).

7. Système de raclage selon l'une des revendications 1 à 6, **caractérisé en ce que** chaque bloc de raclage (2) présente une face supérieure avec un capuchon de protection (10, 16) en métal, lequel est adapté pour s'appliquer sur le convoyeur à bande (G) et s'appuyer élastiquement sur le convoyeur à bande (G).

8. Système de raclage selon la revendication 7, **caractérisé en ce que** chaque bloc de raclage (2) est construit à partir des quatre sections partielles suivantes :
- fixation au support de système (3),
- une section d'amortissement parallélépipédique raccordée placée par-dessus,
- une section de flexion trapézoïdale effilée placée par-dessus,
- et un capuchon de protection (10, 16) placé par-dessus.

9. Système de raclage selon l'une des revendications 7 et 8, **caractérisé en ce que** la surface du bloc de raclage (2) et du capuchon de protection (10, 16) est conçue de telle façon au point de raclage, que l'effet de raclage ne provoque pas de pelage.

10. Système de raclage selon l'une des revendications 7 à 9, **caractérisé en ce que** les matériaux d'amortissement des blocs de raclage (2) présentent des alésages (36) pour la réception de douilles (35) par complémentarité de forme ainsi qu'un gradin sur le côté intérieur, sur lequel une bague de blocage (42) peut être posée.

11. Système de raclage selon la revendication 10, **caractérisé en ce qu'**un assemblage à vis avec les douilles (35) est protégé contre un desserrage à l'aide de vis d'expansion et/ou de rondelles Nordlock.

12. Système de raclage selon l'une des revendications 7 à 11, **caractérisé en ce que** du métal dur ou de l'acier inoxydable est choisi comme matériau pour le capuchon de protection (10, 16).

13. Combinaison d'un système de raclage selon l'une des revendications 1 à 12 en tant que racleur préalable avec un autre racleur de bande en tant que racleur consécutif (12), dans laquelle les deux racleurs forment conjointement un système composé d'un racleur préalable et d'un racleur consécutif, et le racleur consécutif est constitué de modules de racleur présentant un porte-lame avec une lamelle de raclage formant un angle obtus (a) par rapport au convoyeur à bande (G) dans la direction d'avance de la bande, ainsi qu'un axe de rotation de corps de raclage apte à s'orienter librement.

14. Transporteur à bande avec un convoyeur à bande (G), un tambour d'éjection (1) et un système de raclage pour la zone de déviation formée par le tambour d'éjection (1) selon la revendication 9, dans lequel la surface du bloc de raclage (2) et du capuchon de protection (10, 16) est conçue de telle façon au point de raclage, que la plan (19) défini par l'axe médian (M) du tambour d'éjection (1) et la ligne de pression coupe l'autre plan (18) appliqué sur la face supérieure des blocs de raclage (2) au niveau de la ligne de pression sous un angle aigu (γ), et l'autre plan (18) s'étend ainsi sous l'axe médian (M) du tambour d'éjection (1).
